(19) Europäisches Patentamt
European Patent Office
Office européen des brevets

(11) **EP 3 945 475 A1**

(12) **EUROPEAN PATENT APPLICATION**

(43) Date of publication:
**02.02.2022 Bulletin 2022/05**

(51) International Patent Classification (IPC):
**G06Q 10/00** $^{(2012.01)}$ **G06Q 10/06** $^{(2012.01)}$

(21) Application number: **21177343.7**

(52) Cooperative Patent Classification (CPC):
**G06Q 10/00; G06Q 10/0631; G06Q 10/06311**

(22) Date of filing: **02.06.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.07.2020 JP 2020130542**

(71) Applicant: **FUJITSU LIMITED**
**Kanagawa 211-8588 (JP)**

(72) Inventors:
• **Hotta, Shinji**
**Kawasaki-shi, Kanagawa, 211-8588 (JP)**
• **Karasudani, Akira**
**Kawasaki-shi, Kanagawa, 211-8588 (JP)**

(74) Representative: **Hoffmann Eitle**
**Patent- und Rechtsanwälte PartmbB**
**Arabellastraße 30**
**81925 München (DE)**

(54) **INFORMATION PROCESSING METHOD, INFORMATION PROCESSING PROGRAM, AND INFORMATION PROCESSING APPARATUS**

(57) An information processing method by a computer, causing the computer to execute a process includes: receiving an input of assignment target information on assignment targets and assignee information on assignees; referring to priority order pattern information indicating an order of priority of a plurality of desired conditions identified based on a ratio, in result information pieces obtained by assigning past assignment targets to the assignees by applying each of the plurality of desired conditions, between the number of the result information pieces satisfying a constraint condition to be applied in an assignment of the assignment targets to the assignees and the number of the result information pieces including the assignee information matching the assignees determined according to the desired condition; and outputting results of assigning the assignment targets to the assignees such that the desired conditions are satisfied according to the order of priority.

FIG. 1

EP 3 945 475 A1

**Description**

FIELD

The embodiment discussed herein is related to an information processing method, an information processing program, and an information processing apparatus.

BACKGROUND

In the related art, tasks are manually assigned such that a constraint condition that has to be satisfied without fail for the tasks is satisfied and desired conditions are satisfied in descending order of priority. In recent years, there has been known a technique for creating an assignment model for assigning tasks by using the results of past assignments conducted as described above.

Regarding constraint conditions and desired conditions, there has been known a technique in the related art for making a production plan by extracting rules (desired conditions) from features of past production plans that have been already implemented and applying the rules and constraint conditions related to the rules in accordance with a purchase order of products.

Related art is disclosed in Japanese Laid-open Patent Publication No. 2017-122955.

In the former technique of the aforementioned techniques in the related art, it is requested to create a model such that assignment results satisfy the constraint conditions without fail, and it is difficult to create a model with high accuracy. In the latter technique, since the constraint conditions and the desired conditions are not distinguished from each other, it is difficult to identify an order of priority of the desired conditions in a state where the constraint conditions are satisfied.

As described above, in the related art, it is difficult to identify the order of priority of the desired conditions in the state where the constraint conditions are satisfied.

In one aspect, an object of the present disclosure is to obtain assignment results according to an order of priority of desired conditions in a state where a constraint condition is satisfied.

SUMMARY

According to an aspect of the embodiments, an information processing method by a computer, causing the computer to execute a process includes: receiving an input of assignment target information on assignment targets and assignee information on assignees; referring to priority order pattern information indicating an order of priority of a plurality of desired conditions identified based on a ratio, in result information pieces obtained by assigning past assignment targets to the assignees by applying each of the plurality of desired conditions, between the number of the result information pieces satisfying a constraint condition to be applied in an assignment of the assignment targets to the assignees and the number of the result information pieces including the assignee information matching the assignees determined according to the desired condition; and outputting results of assigning the assignment targets to the assignees such that the desired conditions are satisfied according to the order of priority.

It is possible to obtain assignment results according to the order of priority of desired conditions in a state where a constraint condition is satisfied.

BRIEF DESCRIPTION OF DRAWINGS

FIG. 1 is a diagram illustrating an example of a system configuration of an information processing system.
FIG. 2 is a diagram illustrating an example of a hardware configuration of an information processing apparatus.
FIG. 3 is a diagram illustrating an example of a desired condition database.
FIG. 4 is a diagram illustrating an example of a constraint condition database.
FIG. 5 is a diagram illustrating an example of an assignment target database.
FIG. 6 is a diagram illustrating an example of an assignee database.
FIG. 7 is a diagram illustrating an example of a past assignment database.
FIG. 8 is a diagram illustrating an example of a functional configuration of the information processing apparatus.
FIG. 9 is a flowchart for explaining an overall process by the information processing apparatus.
FIG. 10 is a flowchart for explaining a learning process by the information processing apparatus.
FIGs. 11A and 11B are a first diagram for explaining a learning process.
FIGs. 12A and 12B are a second diagram for explaining the learning process.

FIG. 13 is a flowchart for explaining learning of a priority order pattern by the information processing apparatus.

FIG. 14 is a first diagram for explaining learning of a priority order pattern.

FIG. 15 is a second diagram for explaining the learning of the priority order pattern.

FIG. 16 is a third diagram for explaining the learning of the priority order pattern.

FIG. 17 is a fourth diagram for explaining the learning of the priority order pattern.

FIG. 18 is a fifth diagram for explaining the learning of the priority order pattern.

FIG. 19 is a sixth diagram for explaining the learning of the priority order pattern.

FIG. 20 is a seventh diagram for explaining the learning of the priority order pattern.

FIG. 21 is an eighth diagram for explaining the learning of the priority order pattern.

FIG. 22 is a diagram presenting an example of learned pattern information.

FIG. 23 is a first flowchart for explaining an assignment process by the information processing apparatus.

FIG. 24 is a second flowchart for explaining the assignment process by the information processing apparatus.

FIG. 25 is a first diagram for explaining an assignment process.

FIG. 26 is a second diagram for explaining the assignment process.

FIG. 27 is a third diagram for explaining the assignment process.

FIG. 28 is a fourth diagram for explaining the assignment process.

FIG. 29 is a diagram illustrating a display example of assignment results.

DESCRIPTION OF EMBODIMENTS

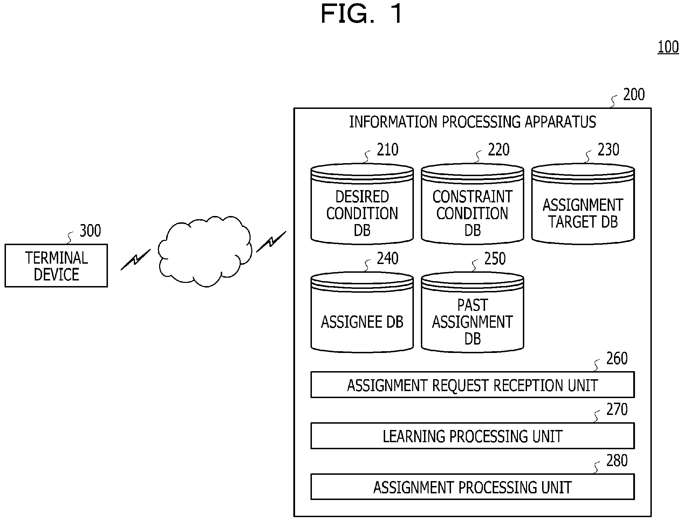

Hereinafter, the embodiment will be described with reference to the drawings. FIG. 1 is a diagram illustrating an example of a system configuration of an information processing system.

An information processing system 100 in the present embodiment includes an information processing apparatus 200 and a terminal device 300. The information processing apparatus 200 and the terminal device 300 are coupled to each other via a network or the like and communicate with each other.

The information processing system 100 in the present embodiment performs a task assignment in various types of businesses such that the task assignment satisfies desired conditions in descending order of priority while satisfying a constraint condition. The constraint condition in the present embodiment is a condition that has to be satisfied for tasks, and the desired conditions in the present embodiment are conditions that are preferably satisfied as much as possible for the tasks.

For example, in the information processing system 100, the information processing apparatus 200 performs learning using information indicating past task assignment results to generate a learned pattern indicating an order of priority of the desired conditions in a state where the constraint condition is satisfied.

Next, in response to reception of an input of information indicating task specifications and task assignees from the terminal device 300, the information processing apparatus 200 uses the learned pattern to perform a task assignment such that the constraint condition is satisfied and the desired conditions are satisfied in descending order of priority. Then, the information processing apparatus 200 outputs the assignment results to the terminal device 300.

In the present embodiment, it is possible to obtain the assignment results according to the order of priority of the desired conditions in the state where the constraint condition is satisfied as described above.

The information processing system 100 in the present embodiment is used, for example, by a household appliance mass retailer that assigns tasks of delivering commodities to delivery agents or the like. The present embodiment will be described below on the assumption that a task is to deliver a commodity and one in charge of the task is a delivery agent.

The information processing apparatus 200 in the present embodiment includes a desired condition database 210, a constraint condition database 220, an assignment target database 230, an assignee database 240, and a past assignment database 250. The information processing apparatus 200 also includes an assignment request reception unit 260, a learning processing unit 270, and an assignment processing unit 280.

The desired condition database 210 stores desired condition information indicating desired conditions for assigning commodity delivery tasks to delivery agents. The constraint condition database 220 stores constraint condition information indicating constraint conditions for assigning the commodity delivery tasks to the delivery agents.

The assignment target database 230 stores assignment target information on tasks (assignment targets) to be assigned to the delivery agents. For example, the assignment target database 230 stores information on tasks which are assignment targets to be assigned to those in charge.

The assignee database 240 stores assignee information on the delivery agents (assignees) to which the commodity delivery tasks are to be assigned. For example, the assignee database 240 stores the information on those in charge to serve as task assignees.

The past assignment database 250 stores past assignment information indicating results of assignments manually conducted in the past. For example, the past assignment database 250 stores information on deliveries conducted in the past by the delivery agents.

The assignment request reception unit 260 in the present embodiment receives a delivery assignment request to the delivery agents by newly receiving an input of information indicating commodities to be delivered and delivery agents from the terminal device 300. For example, the assignment request reception unit 260 receives a task assignment request to those in charge by receiving an input of new assignment target information and the assignee information from the terminal device 300.

The learning processing unit 270 performs machine learning in reference to the databases described above, thereby creating a learned pattern indicating a priority order pattern of desired conditions in the state where a constraint condition is satisfied.

For example, for each of the plurality of desired conditions, the learning processing unit 270 calculates a ratio at which assignment results obtained by a task assignment while applying the concerned desired condition satisfy both the desired condition and the constraint condition and match past assignment results. Then, a priority order pattern indicating the order of priority of the desired conditions is identified based on the ratios calculated for the respective desired conditions and is set as a learned pattern.

When the assignment request reception unit 260 receives the assignment request, the assignment processing unit 280 performs a process of assigning the commodity deliveries to the delivery agents based on the desired condition database 210, the constraint condition database 220, and the learned pattern, and outputs the assignment results to the terminal device 300. Details of the learning processing unit 270 and the assignment processing unit 280 will be described later.

The example illustrated in FIG. 1 employs the configuration where the desired condition database 210, the constraint condition database 220, the assignment target database 230, the assignee database 240, and the past assignment database 250 are provided in the information processing apparatus 200, but the configuration is not limited to this example. All or some of these databases may be provided in an external apparatus capable of communicating with the information processing apparatus 200.

The information processing apparatus 200 is one apparatus in the example illustrated in FIG. 1, but is not limited to this example. The information processing apparatus 200 in the present embodiment may include a plurality of information processing apparatuses. For example, the functions implemented by the information processing apparatus 200 may be implemented by the plurality of information processing apparatuses.

The information processing system 100 includes one terminal device 300 in the example illustrated in FIG. 1. However, the information processing system 100 may include any number of terminal devices 300.

The following embodiment will be described on the assumption that the information processing system 100 is used, for example, by a household appliance mass retailer that assigns delivery tasks to delivery agents or the like. Therefore, the databases included in the information processing apparatus 200 store information relevant to the household appliance mass retailer in which the terminal device 300 is installed. For example, the databases in the information processing apparatus 200 are databases suitable to a user who receives services provided by the information processing apparatus 200.

When the information processing apparatus 200 provides services to a plurality of retailers, the information processing apparatus 200 may have the databases for each of the users who receive the services.

The information processing apparatus 200 in the present embodiment will be further described below.

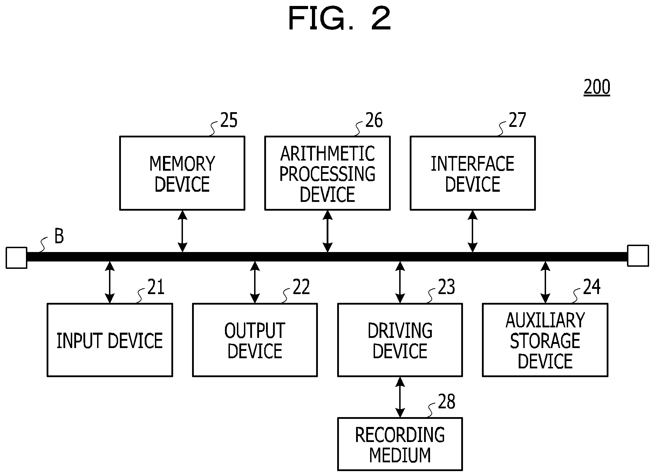

FIG. 2 is a diagram illustrating an example of a hardware configuration of an information processing apparatus. The information processing apparatus 200 in the present embodiment is a computer including an input device 21, an output device 22, a driving device 23, an auxiliary storage device 24, a memory device 25, an arithmetic processing device 26, and an interface device 27, which are coupled to each other via a bus B.

The input device 21 is a device for inputting various types of information and is implemented by, for example, a touch panel or the like. The output device 22 is a device for outputting various types of information and is implemented by, for example, a display, or the like. The interface device 27 is a device for coupling to the network.

An information processing program for implementing the assignment request reception unit 260, the learning processing unit 270, and the assignment processing unit 280 is at least part of various programs for controlling the information processing apparatus 200. For example, the information processing program is provided through distribution of a storage medium 28, download from the network, or the like. The storage medium 28 in which the information processing program is recorded may be any of various types of storage media such as a storage medium for optically, electrically, or magnetically recording information, a read-only memory (ROM), and a semiconductor memory for electrically recording information like a flash memory.

When the storage medium 28 in which the information processing program is recorded is set in the driving device 23, the information processing program is installed into the auxiliary storage device 24 from the storage medium 28 via the driving device 23. The information processing program downloaded from the network is installed into the auxiliary storage device 24 through the interface device 27.

The auxiliary storage device 24 sets up the desired condition database 210, the constraint condition database 220, the assignment target database 230, the assignee database 240, and the past assignment database 250. The auxiliary storage device 24 stores the information processing program installed in the information processing apparatus 200 and stores various files, data, and so on to be used by the information processing apparatus 200. The memory device 25 reads the information processing program from the auxiliary storage device 24 upon the activation of the information processing apparatus 200 and stores therein the read information processing program. The arithmetic processing device 26 implements various processes to be described later in accordance with the information processing program stored in the memory device 25.

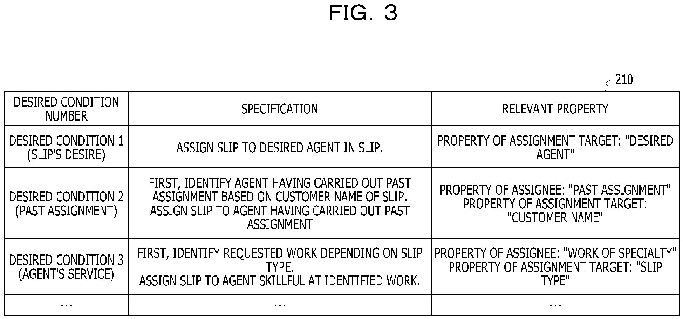

FIG. 3 is a diagram illustrating an example of the desired condition database. The desired condition database 210 in the present embodiment includes a desired condition number, specification, and relevant property as information fields. The field "desired condition number" is associated with the other fields. In the following description, information containing the value in the field "desired condition number" and the values in the other fields will be referred to as desired condition information.

The value in the field "desired condition number" is identification information for identifying a desired condition. The value in the field "specification" specifies details of the desired condition. The value in the field "relevant property" specifies a property in the desired condition. The property in the desired condition is a field which is included in the assignment target information or the assignee information, and which is referred to in order to satisfy the desired condition.

In FIG. 3, for example, the specification of the desired condition identified by "desired condition 1" is "Assign each slip to a desired agent in the slip". The property referred to in order to satisfy this desired condition is a field "desired agent" included in the assignment target information.

The specification of the desired condition identified by "desired condition 2" is "Identify, based on a customer name of each slip, an agent having carried out a past assignment associated with the customer name, and assign the slip to the agent having carried out the past assignment". The properties referred to in order to satisfy this condition are a field "past assignment" included in the assignee information and a field "customer name" included in the assignment target information.

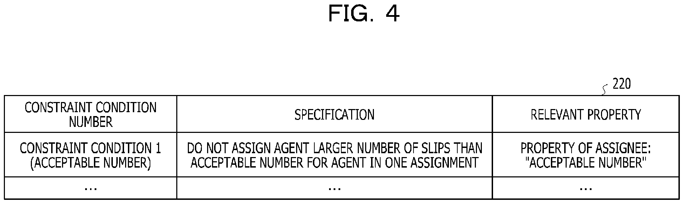

Next, the constraint condition database 220 will be described with reference to FIG. 4. FIG. 4 is a diagram illustrating an example of the constraint condition database.

The constraint condition database 220 in the present embodiment includes a constraint condition number, specification, and relevant property as information fields. The field "constraint condition number" is associated with the other fields. In the following description, information containing the value in the field "constraint condition number" and the values in the other fields will be referred to as constraint condition information.

The value in the field "constraint condition number" is identification information for identifying a constraint condition. The value in the field "specification" specifies details of the constraint condition. The value in the field "relevant property" specifies a property in the constraint condition. The property in the constraint condition is a field which is included in the assignment target information or the assignee information, and which is referred to in order to satisfy the constraint condition.

In FIG. 4, for example, the specification of the constraint condition identified by "constraint condition 1" is "Do not assign any agent a larger number of slips than an acceptable number of the agent in one assignment". The property referred to in order to satisfy this constraint condition is a field "acceptable number" included in the assignee information.

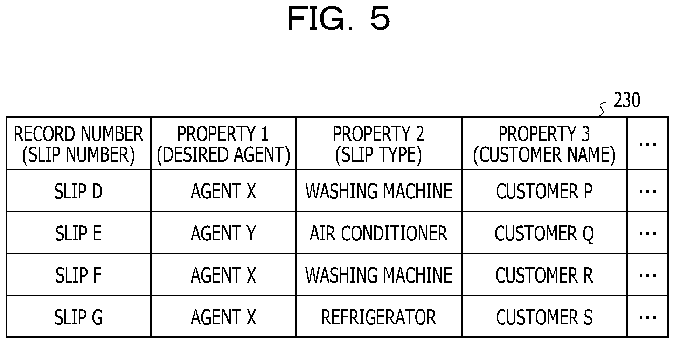

Next, the assignment target database 230 in the present embodiment will be described with reference to FIG. 5. FIG. 5 is a diagram illustrating an example of the assignment target database.

The assignment target database 230 in the present embodiment includes a record number, a property 1, a property 2, a property 3, and so on as information fields. The field "record number" is associated with the other fields. In the following description, information containing the value in the field "record number" and the values in the other fields will be referred to as assignment target information.

The value in the field "record number" is identification information for identifying a task. In the present embodiment, a task as an assignment target is a commodity delivery. Thus, the record number specifies a slip number for identifying a slip created in the course of delivering a commodity. The following description will be given on the assumption that the delivery is conduced once for one slip number.

The values in the fields "property 1", "property 2", and "property 3" specify a desired agent, a slip type, and a customer name, respectively, in one delivery identified by the slip number. The assignment target information may include properties other than the properties 1 to 3 presented in FIG. 5.

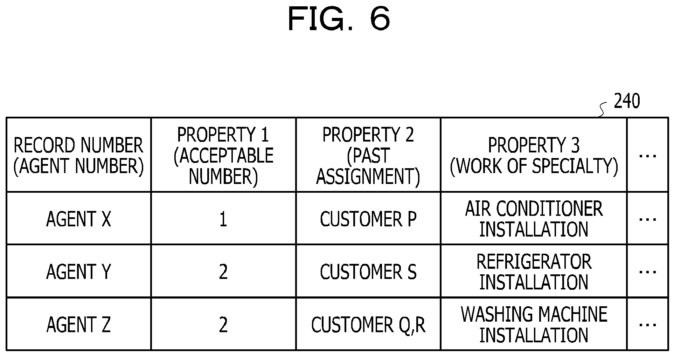

Next, the assignee database 240 will be described with reference to FIG. 6. FIG. 6 is a diagram illustrating an example of the assignee database 240.

The assignee database 240 in the present embodiment includes a record number, a property 1, a property 2, a property 3, and so on as information fields. The field "record number" is associated with the other fields. In the following description, information containing the value in the field "record number" and the values in the other fields will be referred to as assignee information.

The value in the field "record number" is identification information for identifying an agent in charge. In the present embodiment, the agent in charge as a task assignee is a delivery agent. Thus, the record number specifies an agent number for identifying a delivery agent.

Each value in the field "property 1" specifies the number of slips (deliveries) acceptable by the agent identified by the associated agent number in one assignment. For example, the value in the field "property 1" is an acceptable number of the agent identified by the associated agent number in one assignment.

Each value in the field "property 2" specifies the name of a customer to whom the agent delivered a commodity in the past, and the value in the field "property 3" specifies a work of specialty of the agent. The assignee information may include properties other than the properties 1 to 3 presented in FIG. 6.

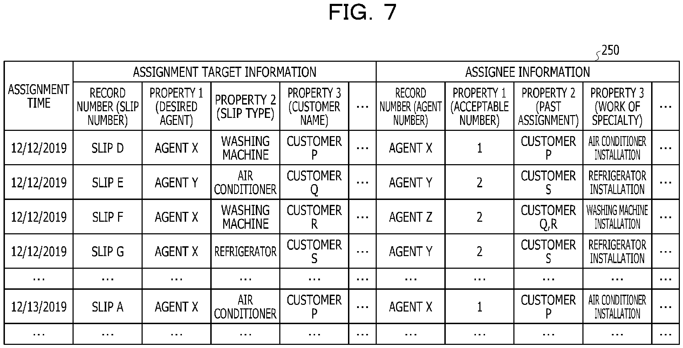

Next, the past assignment database 250 will be described with reference to FIG. 7. FIG. 7 is a diagram illustrating an example of the past assignment database.

The past assignment database 250 in the present embodiment includes an assignment time, assignment target information, and assignee information as information fields. The field "assignment time" is associated with the other fields. In the following description, information containing the value in the field "assignment time" and the assignment target information and the assignee information which are associated with the value in the assignment time will be referred to as past assignment information.

The value in the field "assignment time" specifies a time when the assignment was performed. The values in the field "assignment target information" are of the assignment target information for each slip number. The values in the field "assignee information" are of the assignee information for the agent number of the delivery agent assigned the commodity delivery identified by the slip number.

In FIG. 7, in an assignment work performed on 2019/12/12, a slip number "slip D" included in the assignment target information is associated with an agent number "agent X" included in the assignee information. This means that the delivery identified by the slip number "slip D" is assigned to the agent X in the assignment work at that time.

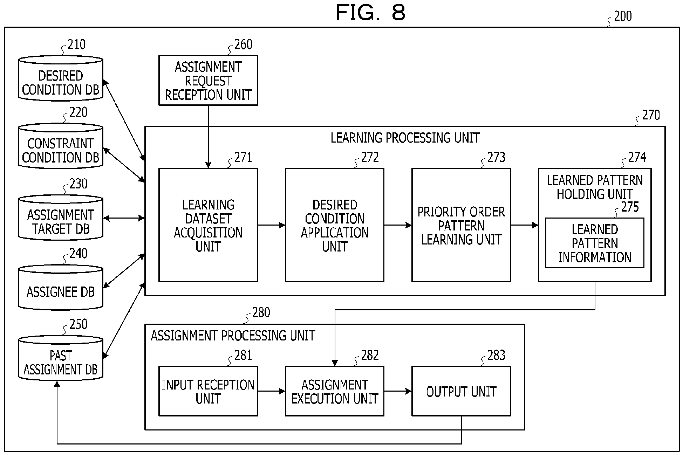

Next, a functional configuration of the information processing apparatus 200 will be described with reference to FIG. 8. FIG. 8 is a diagram illustrating an example of the functional configuration of the information processing apparatus.

The information processing apparatus 200 in the present embodiment includes the assignment request reception unit 260, the learning processing unit 270, and the assignment processing unit 280.

The learning processing unit 270 includes a learning dataset acquisition unit 271, a desired condition application unit 272, a priority order pattern learning unit 273, and a learned pattern holding unit 274.

The learning dataset acquisition unit 271 acquires learning datasets to be used for learning the order of priority of the desired conditions. For example, the learning dataset acquisition unit 271 acquires, as learning datasets, the desired condition information stored in the desired condition database 210, the constraint condition information stored in the constraint condition database 220, and the past assignment information stored in the past assignment database 250.

The desired condition application unit 272 generates application result information by applying desired conditions to the past assignment information and divides the application result information into a plurality of groups. In the present embodiment, information indicating results of an assignment performed so as to satisfy the desired conditions is referred to as application result information.

In the present embodiment, each of the divided groups is used as a learning dataset. For example, the desired condition application unit 272 generates a plurality of learning datasets from the past assignment information and the desired conditions.

The priority order pattern learning unit 273 uses the plurality of learning datasets generated by the desired condition application unit 272 and the constraint condition information to obtain, for each learning dataset, the order of priority of the desired conditions in the state where a constraint condition is satisfied.

Then, the priority order pattern learning unit 273 learns a priority order pattern of the desired conditions from the orders of priority of the desired conditions obtained for the respective learning datasets, and outputs learned pattern information 275. Details of the processes by the desired condition application unit 272 and the priority order pattern learning unit 273 will be described later.

The learned pattern holding unit 274 holds the learned pattern information 275 that is a learning result by the priority order pattern learning unit 273.

The assignment processing unit 280 includes an input reception unit 281, an assignment execution unit 282, and an output unit 283. The input reception unit 281 receives an input of the assignment target information and the assignee information from the terminal device 300. The assignment target information and the assignee information received by the input reception unit 281 are not the information already stored in the assignment target database 230 and the assignee database 240, but are input as information for executing a new assignment.

Using the assignment target information and the assignee information in the input received by the input reception unit 281 and the learned pattern information 275 held in the learned pattern holding unit 274, the assignment execution unit 282 assigns a delivery task for each of the slip numbers included in the assignment target information to any one of the delivery agents included in the assignee information, and obtains an assignment result.

The output unit 283 generates past assignment information from the information indicating the assignment results obtained by the assignment execution unit 282 and stores the past assignment information in the past assignment database 250. At this time, the information to be stored in the past assignment database 250 may be modified by an operator as appropriate. The output unit 283 outputs information indicating the assignment results obtained by the assignment execution unit 282 to the terminal device 300. For example, the output unit 283 causes the terminal device 300 to display the information indicating the assignment results.

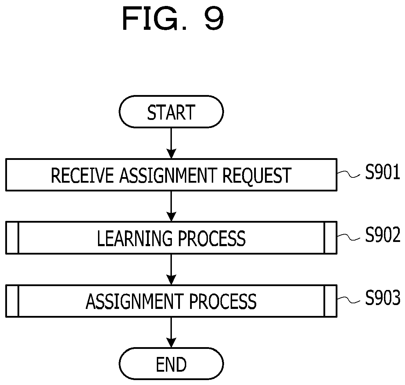

Next, an operation of the information processing apparatus 200 in the present embodiment will be described. FIG. 9 is a flowchart for explaining an overall process by the information processing apparatus.

When the assignment request reception unit 260 receives an assignment request from the terminal device 300 (step S901), the information processing apparatus 200 in the present embodiment causes the learning processing unit 270 to perform a process of learning a priority order pattern of the desired conditions (step S902). Subsequently, the information processing apparatus 200 causes the assignment processing unit 280 to execute the assignment using the learned pattern information 275 (step S903). Details of steps S902 and S903 will be described later.

In the example illustrated in FIG. 9, the process by the learning processing unit 270 and the process by the assignment processing unit 280 are described as a series of processes continuously performed, but these processes are not limited to this example. For example, the process by the learning processing unit 270 may be performed at a timing independent of the process by the assignment processing unit 280 as a preliminary process before reception of the assignment request. In this case, the assignment processing unit 280 may refer to the learned pattern information 275 held in the learned pattern holding unit 274.

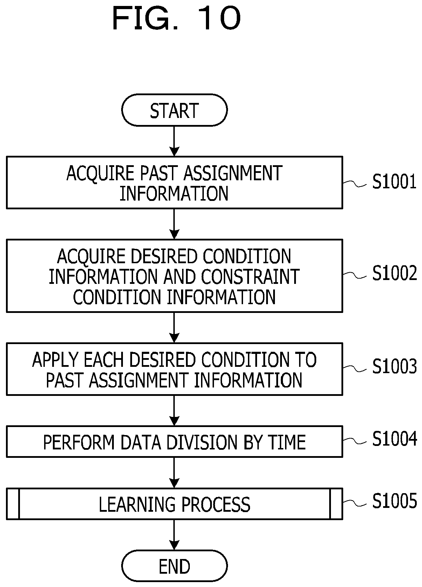

Next, the process by the learning processing unit 270 in the information processing apparatus 200 will be described with reference to FIG. 10. FIG. 10 is a flowchart for explaining the learning process by the information processing apparatus.

The learning processing unit 270 in the information processing apparatus 200 in the present embodiment causes the learning dataset acquisition unit 271 to acquire the past assignment information from the past assignment database 250 (step S1001).

Subsequently, the learning dataset acquisition unit 271 acquires the desired condition information from the desired condition database 210 and acquires the constraint condition information from the constraint condition database 220 (step S1002).

Then, the learning processing unit 270 causes the desired condition application unit 272 to apply the acquired desired condition information to the past assignment information to generate the application result information (step S1003).

For example, the desired condition application unit 272 assigns the assignment targets included in the past assignment information to the past assignees so as to satisfy each of the desired conditions indicated by the desired condition information, and acquires the results as the application result information.

Subsequently, the learning processing unit 270 causes the desired condition application unit 272 to divide the application result information generated in step S1003 into groups for the respective assignment times included in the past assignment information (step S1004).

In the present embodiment, the information generated through the process by the desired condition application unit 272 at steps up to S1004 is used as learning datasets. Therefore, in the present embodiment, the plurality of learning datasets are generated from the past assignment information and the desired conditions through the process by the desired condition application unit 272. Details of the learning datasets will be described later.

Subsequently, the learning processing unit 270 causes the priority order pattern learning unit 273 to learn the priority order pattern of the desired conditions in the state where the constraint condition is satisfied, by using the plurality of learning datasets (step S1005). The process at step S1005 will be described in detail later.

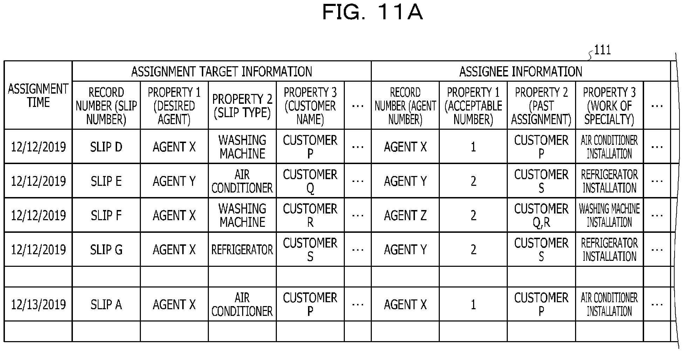

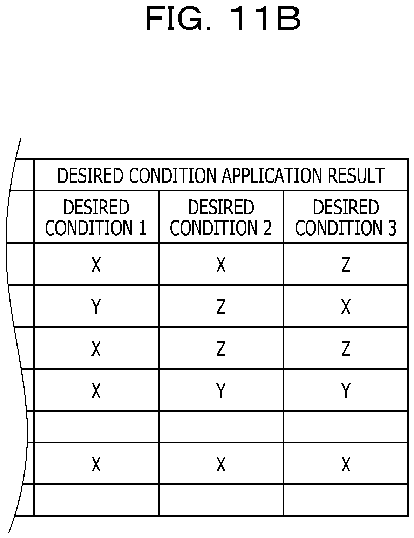

Next, with reference to FIGs. 11A and 11B, the process by the desired condition application unit 272 at steps S1001 to S1004 in FIG. 10 will be described in detail.

FIGs. 11A and 11B are a first diagram for explaining the learning process. In FIGs. 11A and 11B, the process at steps S1001 to S1003 in FIG. 10 will be explained.

FIGs. 11A and 11B illustrate an example of application result information 111 of desired conditions. The application result information 111 is information in which the information fields included in the past assignment information are associated with a field "desired condition application result" and is one type of intermediate data generated in the process by the desired condition application unit 272.

The field "desired condition application result" is associated with fields "desired condition 1", "desired condition 2", and "desired condition 3". A value in each of the latter fields indicates a result of applying the corresponding desired condition to each record in the past assignment information.

In the present embodiment, when the learning dataset acquisition unit 271 acquires the past assignment information and the desired condition information, the learning processing unit 270 causes the desired condition application unit 272 to apply each desired condition specified in the desired condition information to each record in the past assignment information and associates the application result with the record concerned.

For example, a case where the desired conditions 1 and 2 are applied to the past assignment information containing the record number "slip D" and the agent number "X" will be considered herein. The specification of the desired condition 1 is "Assign each slip to a desired agent in the slip" (see FIG. 3).

In this case, the value in the property 1 (desired agent) of the assignment target information in the past assignment information is the agent X. Thus, the assignee specified in the application result of applying the desired condition 1 to the past assignment information is the agent X.

The specification of the desired condition 2 is an agent having carried out a past assignment. In this case, in the past assignment information, the value in the property 3 (customer name) of the assignment target information is a customer P, and the value in the property 2 (past assignment) included in the assignee information for the agent number "agent X" is the customer P. Thus, the assignee specified in the application result of applying the desired condition 2 to the past assignment information is the agent X.

Information in which the results of applying the desired conditions 1 to 3 are associated with each of the records in the past assignment information as described above is the application result information 111.

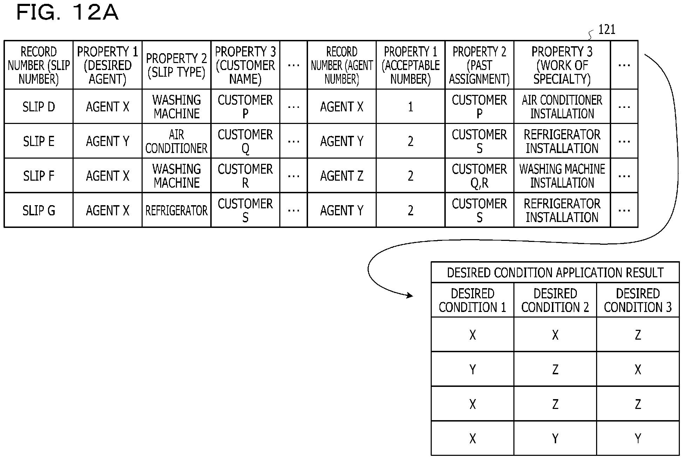

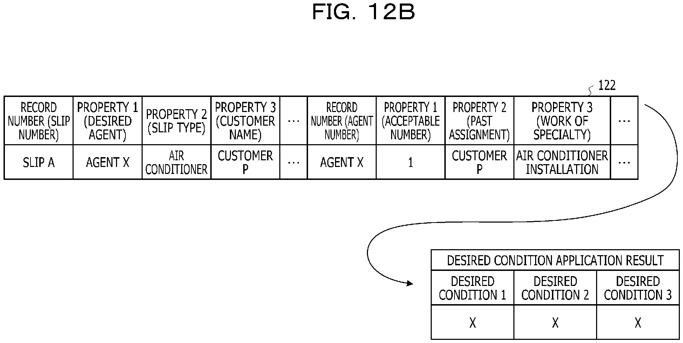

Next, the process at step S1004 in FIG. 10 will be described with reference to FIGs. 12A and 12B. FIGs. 12A and 12B are a second diagram for explaining the learning process.

The desired condition application unit 272 divides the application result information 111 into groups for the respective assignment times and uses the groups as learning datasets. In this division, the desired condition application unit 272 forms a group of records having the same assignment time in the application result information 111.

FIGs. 12A and 12B present a learning dataset 121 composed of records each having a value of 2019/12/12 in the field "assignment time" in the application result information 111 and a learning dataset 122 composed of records each having a value of 2019/12/13 in the field "assignment time" in the application result information 111.

In the example of FIGs. 12A and 12B, both of the learning datasets 121 and 122 do not include the field "assignment time", but may include the field "assignment time" as an information field. Although the value in the field "assignment time" in the present embodiment is just a date, the value in the field "assignment time" may include a date and a time.

The learning processing unit 270 in the present embodiment causes the priority order pattern learning unit 273 to learn the priority order pattern of the desired conditions by using the plurality of learning datasets as illustrated in FIGs. 12A and 12B.

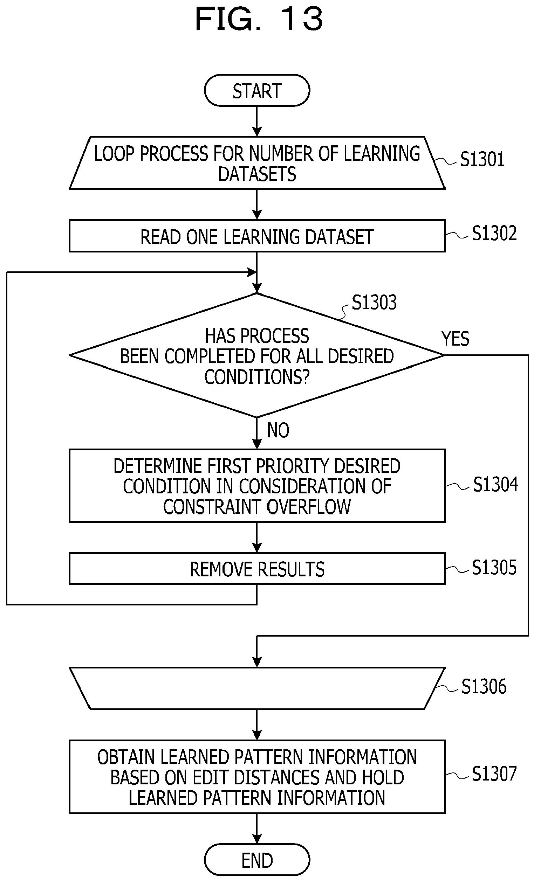

The process by the priority order pattern learning unit 273 will be described below with reference to FIG. 13. FIG. 13 is a flowchart for explaining the learning of the priority order pattern by the information processing apparatus. The process in FIG. 13 presents details of the process at step S1005 in FIG. 10.

In the learning processing unit 270 in the present embodiment, the priority order pattern learning unit 273 iterates a loop of the process at step S1302 and subsequent steps for the number of the learning datasets generated at step S1004 (step S1301). The learning dataset in the present embodiment may be a set of a plurality of records.

The priority order pattern learning unit 273 reads one learning dataset (step S1302). Subsequently, the priority order pattern learning unit 273 determines whether the process for all the desired conditions included in the desired condition database 210 has been completed (step S1303).

If the process for all the desired conditions has been performed at step S1303, the learning processing unit 270 proceeds to step S1306 to be described later.

If the process for all the desired conditions has not been performed at step S1303, the priority order pattern learning unit 273 determines the desired condition with the first priority in consideration of a constraint overflow (step S1304).

For example, the priority order pattern learning unit 273 identifies, as the first priority desired condition, the desired condition satisfied in the largest number of deliveries (tasks) in the state where the constraint condition is satisfied.

Then, when the first priority desired condition is identified, the priority order pattern learning unit 273 thins out the records included in the learning dataset by removing the records satisfying the identified desired condition therefrom (step S1305), and returns to step S1303.

If the process for all the desired conditions has been completed at step S1303, the priority order pattern learning unit 273 performs the process at steps S1302 to S1305 for all the learning datasets (step S1306).

Subsequently, from the priority order patterns of the desired conditions obtained for the respective learning datasets, the priority order pattern learning unit 273 removes duplication of the priority order patterns to thereby extract the priority order patterns different from each other. Then, the priority order pattern learning unit 273 obtains the learned pattern information 275 to be a learning result in the learning, based on edit distances between the extracted priority order patterns and the priority order pattern of each learning dataset, causes the learned pattern holding unit 274 to hold the learned pattern information 275 (step S1307), and ends the process.

In the present embodiment, the learned pattern information 275 is generated each time the learning processing unit 270 performs the process. Thus, in the learned pattern information 275, a pattern indicating the order of priority of the desired conditions may be associated with information indicating the time when the learning process was executed by the learning processing unit 270.

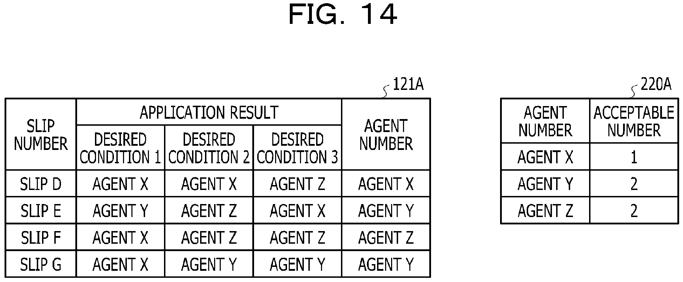

The process by the priority order pattern learning unit 273 will be further described below with reference to FIGs. 14 to 22.

FIG. 14 is a first diagram for explaining learning of a priority order pattern. In FIG. 14, representation of a learning dataset and representation of constraint conditions to be used in the following description will be explained.

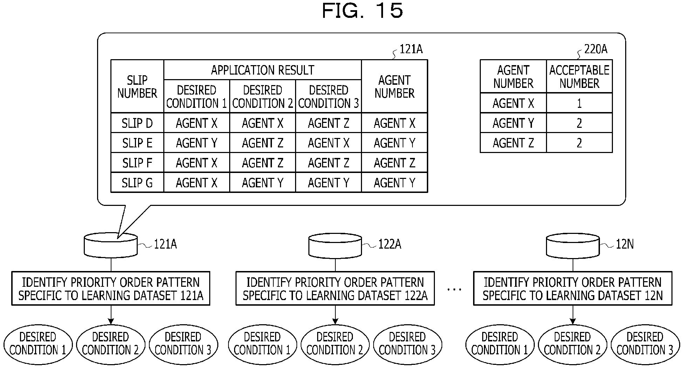

In the present embodiment, in the following description with reference to FIG. 15 and the subsequent drawings, the learning dataset to be used by the priority order pattern learning unit 273 is represented as a learning dataset 121A including values in the fields "slip number", "application result", and "agent number", which are extracted from the learning dataset 121.

The constraint conditions stored in the constraint condition database 220 are represented as a constraint dataset 220A in which the field "agent number" and the field "property 1 (acceptable number) in the assignee information included in the learning dataset 121 are associated with each other".

The learning dataset 121A indicates, for example, that the assignee for the delivery identified by the slip number "slip D" is the agent number "agent X", whereas the delivery identified by the slip number "slip D" is assigned to the agent X in either of the cases where the desired conditions 1 and 2 are applied thereto, and is assigned to the agent Z in the case where the desired condition 3 is applied thereto.

In the constraint dataset 220A, the acceptable number of deliveries acceptable by the agent number "agent X" in one assignment is "1", and both of the acceptable number of deliveries acceptable by the agent number "agent Y" in one assignment and the acceptable number of deliveries acceptable by the agent number "agent Z" in one assignment are 2.

FIG. 15 is a second diagram for explaining the learning of the priority order pattern. The priority order pattern learning unit 273 in the present embodiment identifies a priority order pattern indicating the order of priority of the desired conditions for each learning dataset.

For example, the priority order pattern learning unit 273 reads the learning dataset 121A and identifies the priority order pattern of the desired conditions 1 to 3 in the learning dataset 121A. Next, the priority order pattern learning unit 273 reads a learning dataset 122A and identifies the priority order pattern of the desired conditions 1 to 3 in the learning dataset 122A. The learning dataset 122A represents the learning dataset 122 in the same way as the learning dataset 121A. A learning dataset 12N represents another learning dataset in the same way as the learning dataset 121A.

In the same manner, the priority order pattern learning unit 273 identifies the priority order pattern of the desired conditions in the learning dataset 12N generated by the desired condition application unit 272.

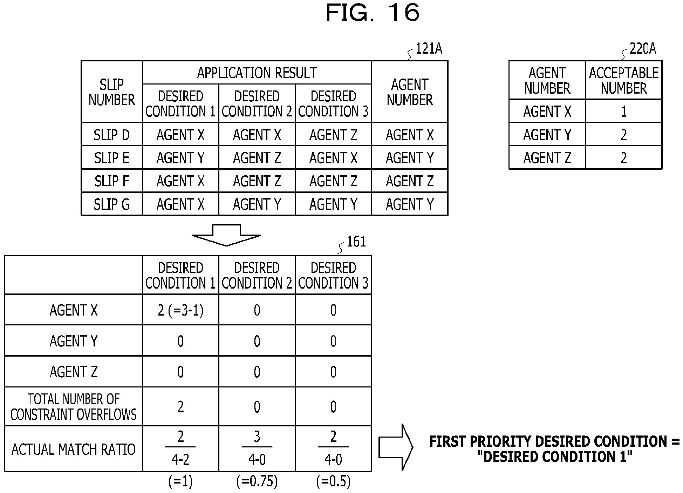

Hereinafter, a method of identifying a priority order pattern of desired conditions in each learning dataset will be described with reference to FIG. 16. FIG. 16 is a third diagram for explaining the learning of the priority order pattern.

For each of the desired conditions, the priority order pattern learning unit 273 in the present embodiment calculates the total number of records not satisfying both the constraint condition and the desired condition among the records included in the learning dataset. For example, the priority order pattern learning unit 273 calculates the total number of records not satisfying the constraint condition in a case where agents are assigned to all the slips (deliveries) so as to satisfy the desired condition.

In the present embodiment, the total number of records not satisfying the constraint condition in the case where the those in charge are allocated to all tasks so as to satisfy the desired condition is referred to as a total number of constraint overflows. The total number of constraint overflows is calculated by the following equation (1):

[Math. 1]

$$N_{over}(k) = \sum_{i=1}^{M} \max[0, \{n_i(k) - C_i\}] \qquad (1)$$

where i is an agent number,
M is a total number of agents,
Ci is an acceptable number for the agent i, and
ni(k) is the number of slips assigned to the agent i when a desired condition k is used.

Next, using the total number of constraint overflows, the priority order pattern learning unit 273 calculates the ratio of the number of records each having the application result matching the assignment result indicated by the past assignment information to the number of records satisfying both the constraint condition and the desired condition in the case where the desired condition is applied to the learning dataset.

For example, the priority order pattern learning unit 273 calculates the ratio of the number of records each having the application result matching the assignment result indicated by the past assignment information to the number of records satisfying both the constraint condition and the desired condition in the case where the desired condition is applied to the learning dataset. In the following description, this ratio is referred to as an actual match ratio.

For example, the actual match ratio indicates the ratio, concerning results of an assignment of the past assignment targets by applying the desired condition for the assignment, between the number of the results satisfying the constraint condition for the assignment and the number of the results matching the past assignment results. The actual match ratio is calculated by the following equation (2):

[Math. 2]

$$R(k) = \frac{N_{match}(k)}{N - N_{over}(k)} \qquad (2)$$

where $N_{match}(k)$ is the number of slips matching the correct assignment results in the case where the slips are assigned by using a desired condition k, and

N is the number of slips.

In the present embodiment, the higher priority is given to the desired condition in descending order of the value of the actual match ratio.

In the example of FIG. 16, calculation results of the total number of constraint overflows and the actual match ratio in the learning dataset 121A for each desired condition are presented as intermediate data 161. The intermediate data 161 is data temporarily generated by the priority order pattern learning unit 273.

As presented in FIG. 16, the total number of records included in the learning dataset 121A is 4. In this case, the application results in the case of applying the desired condition 1 to the learning dataset 121A are that the slips D, F, and G are assigned to the agent X and the slip E is assigned to the agent Y.

In the constraint dataset 220A, the acceptable number for the agent X is 1 and the acceptable number for the agent Y is 2. For example, in the learning dataset 121A, the records including the slips F and G do not satisfy the constraint condition.

For example, in the case of applying the desired condition 1 to the learning dataset 121A, the number of records not satisfying the constraint condition (the total number of constraint overflows) is 2.

In the learning dataset 121A, the number of records satisfying the desired condition 1 and also satisfying the constraint condition is the number obtained by subtracting the total number of constraint overflows from the total number of the records included in the learning dataset 121A.

As a result of comparing the application results of the desired condition 1 with the past assignment results in the learning dataset 121A, the records having the application results matching the past assignment results are the records including the slips D and E, the number of which is 2.

Thus, the actual match ratio in the case of applying the desired condition 1 to the learning dataset 121A is 2/(4 - 2) = 1.

Similarly, in the case of applying the desired condition 2 to the learning dataset 121A, the total number of constraint overflows is 0, and the number of records having the application results matching the past assignment results is 3. Thus, the actual match ratio in the case of applying the desired condition 2 to the learning dataset 121A is 3/(4 - 0) = 0.75.

In the case of applying the desired condition 3 to the learning dataset 121A, the total number of constraint overflows is 0 and the number of records having the application results matching the past assignment results is 2. Thus, the actual match ratio in the case of applying the desired condition 3 to the learning dataset 121A is 2/(4 - 0) = 0.5.

Therefore, the priority order pattern learning unit 273 sets the desired condition 1 with the highest actual match ratio as the first priority desired condition, sets the desired condition 2 as the second priority desired condition, and sets the desired condition 3 as the third priority desired condition. For example, the priority order pattern of the desired conditions in the learning dataset 121A in the state where the constraint condition specified by the constraint dataset 220A is satisfied is the desired condition 1 > the desired condition 2 > the desired condition 3.

In the present embodiment, the priority order pattern indicating the order of priority of the desired conditions for each learning dataset 121A is determined in this manner.

In the example of FIG. 16, the constraint condition is the acceptable number for each agent, but the constraint condition is not limited to this.

The constraint conditions may include various conditions other than the acceptable number in one assignment. For example, the constraint condition database 220 may store constraint condition information in which a statement "Assign a certain assignment target (task) and another assignment target to the same assignee" is contained as a value in a field "constraint specification".

This constraint specification is applied, for example, to cases such as a case of making a delivery plan such that, when a certain customer purchased a commodity A on a certain day and purchased a commodity B on the next day, the deliveries for the slips of these purchases are to be assigned to the same agent, and a case of managing a call center such that a new person and an expert are to be assigned to the same time slot to be in charge of tasks.

The constraint condition database 220 may store constraint condition information in which a statement "Assign a certain assignment target and another assignment target to the same assignee if the two assignment targets have similar attributes" is contained as a value in the field "constraint specification.

This constraint specification is applied, for example, to cases such as a case of making a delivery plan such that a certain slip A and another slip B are to be assigned to the same agent if the customer addresses of the slips A and B are within a predetermined distance.

The constraint condition database 220 may store constraint condition information in which a statement "Keep the number of consecutive assignments of the same assignment target equal to or smaller than a threshold (or equal to or larger than a threshold)" is contained as a value in the field "constraint specification".

This constraint specification is applied, for example, to cases such as a case of assigning persons in charge at a call center such that continuous work for six or more days is prohibited.

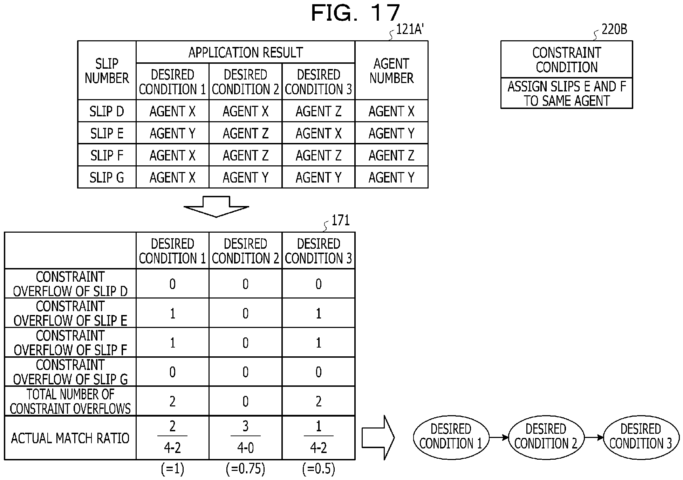

Hereinafter, with reference to FIG. 17, description will be given of an example of a case where the specification of the constraint condition is other than the acceptable number. FIG. 17 is a fourth diagram for explaining the learning of the priority order pattern.

In FIG. 17, a constraint condition in the constraint dataset 220B is "Assign slips E and F to the same agent".

FIG. 17 presents intermediate data 171 in the case of applying this constraint dataset 220B to the learning dataset 121A'.

In this case, the application results of the desired condition 1 are that the slip E is assigned to the agent Y and the slip F is assigned to the agent X. Thus, in the learning dataset 121A', the record including the slip E and the record including the slip F do not satisfy the constraint condition.

Accordingly, the number of records not satisfying the constraint condition specified in the constraint dataset 220B in the case of applying the desired condition 1 to the learning dataset 121A' (the total number of constraint overflows) is 2.

In the learning dataset 121A', the records whose application results in the case of applying the desired condition 1 match the past assignment results are the record including the slip D, the record including the slip E, and the record including the slip G.

Thus, the actual match ratio in the case of applying the desired condition 1 to the learning dataset 121A' under the constraint condition specified in the constraint dataset 220B is 2/(4 - 2) = 1.

Similarly, in the case of applying the desired condition 2 to the learning dataset 121A', the total number of constraint overflows is 0, and the number of records having the application results matching the past assignment results is 3. Thus, the actual match ratio in the case of applying the desired condition 2 to the learning dataset 121A' is 3/(4 - 0) = 0.75.

In the case of applying the desired condition 3 to the learning dataset 121A', the total number of constraint overflows is 2 and the number of records having the application results matching the past assignment results is 2. Thus, the actual match ratio in the case of applying the desired condition 3 to the learning dataset 121A' is 2/(4 - 2) = 0.5.

Therefore, the priority order pattern learning unit 273 sets the desired condition 1 with the highest actual match ratio as the first priority desired condition, sets the desired condition 2 as the second priority desired condition, and sets the desired condition 3 as the third priority desired condition. For example, the priority order pattern of the desired conditions in the learning dataset 121A' is the desired condition 1 > the desired condition 2 > the desired condition 3.

In the present embodiment, for each of the desired conditions, the number of records not satisfying the constraint condition in the case of applying the desired condition is subtracted from the total number of the records in the learning dataset, and then the ratio at which the application results match the past assignment results is calculated as described above. Then, the priority is given to the desired condition in descending order of the ratio thus calculated. In this way, it is possible to identify the order of priority of the desired conditions in the state where the constraint condition is satisfied.

In the present embodiment, the order of priority of the desired conditions is determined based on the actual match ratios as described above. For this reason, it is possible to determine the order of priority of the desired conditions in the state where the constraint condition is satisfied, by using even the past assignment information only including information indicating the assignment results in one assignment.

In the present embodiment, the aforementioned process is performed for the plurality of learning datasets, and the order of priority of the desired conditions is identified for each learning dataset.

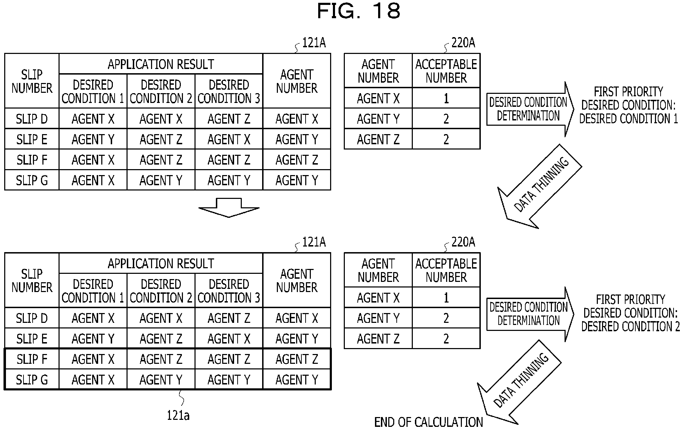

The above description has explained the process at step S1304 in FIG. 13. Next, the process at step S1305 in FIG. 13 will be explained with reference to FIG. 18.

FIG. 18 is a fifth diagram for explaining the learning of the priority order pattern. In the present embodiment, after the first priority desired condition is determined in the process at step S1304, the records satisfying this desired condition are removed from the learning dataset, and then the process at step S1304 is executed again.

For example, when the desired condition 1 is determined as the first priority desired condition in the first iteration of the process at step S1304, the priority order pattern learning unit 273 thins out the learning dataset 121A by removing the records in which the application results of the desired condition 1 match the past assignment results. Next, the priority order pattern learning unit 273 performs the process at step S1304 again by using the thinned learning dataset 121A, and sets the desired condition determined as the highest priority desired condition in this process as the second priority desired condition.

In the example of FIG. 18, the desired condition 1 is determined as the first priority desired condition in the first iteration of the process at step S1304, and accordingly the records in each of which the agent in the application result of the desired condition 1 matches the agent in the past assignment result are removed from the learning dataset 121A. For example, the priority order pattern learning unit 273 removes the records including the slips D and E from the learning dataset 121A and executes the second iteration of the process at step S1304 by using a learning dataset 121a.

In the present embodiment, the iterations of this process lead to an improvement of the accuracy of the order of priority of the desired conditions in the learning dataset 121A.

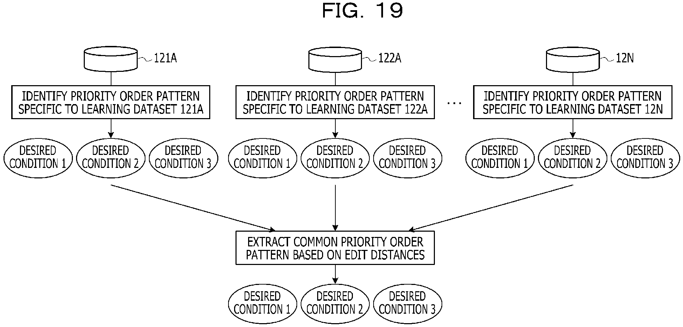

Next, the process at step S1307 in FIG. 13 will be described with reference to FIGs. 19 to 21.

FIG. 19 is a sixth diagram for explaining the learning of the priority order pattern. FIG. 19 illustrates a state where the priority order pattern of the desired conditions is identified for each of the three learning datasets 121A, 122A, and 12N.

In this state, from the priority order patterns of the desired conditions for the respective learning datasets, the priority order pattern learning unit 273 removes duplication of the priority order patterns to thereby extract the priority order patterns different from each other. The priority order pattern learning unit 273 identifies a priority order pattern with the smallest total sum of the edit distances to the priority order patterns in all the learning datasets among the priority order patterns.

In the example of FIG. 19, the priority order pattern of the desired condition 1 > the desired condition 2 > the desired condition 3 is determined from the edit distances between the three priority order patterns identified from the three learning datasets 121A, 122A, and 12N and each priority order pattern extracted from these three priority order patterns.

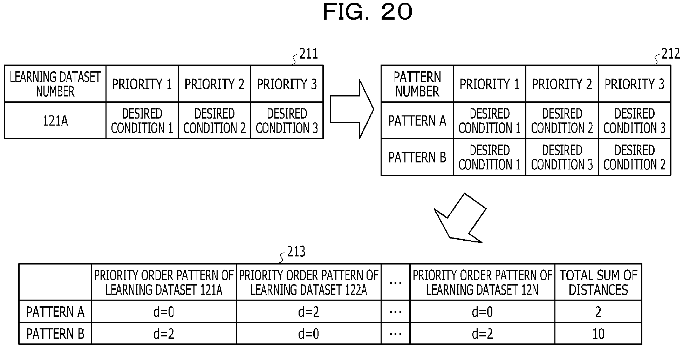

Hereinafter, the edit distance between the priority order patterns will be described in detail with reference to FIG. 20. FIG. 20 is a seventh diagram for explaining the learning of the priority order pattern. FIG. 20 illustrates an example of intermediate data temporarily generated in the course of calculating edit distances by the priority order pattern learning unit 273.

Intermediate data 211 illustrated in FIG. 20 is data in which a learning dataset number identifying each learning dataset is associated with the priority order pattern of the desired conditions identified for the learning dataset. Intermediate data 212 is data indicating a result obtained by removing the duplication of the priority order patterns from the intermediate data 211. Intermediate data 213 is data indicating an edit distance between each of the different priority order patterns and the priority order pattern for each learning dataset.

In the example of FIG. 20, as presented by the intermediate data 211, the priority order patterns identified in the learning dataset 121A and the learning dataset 12N are the desired condition 1 > the desired condition 2 > the desired condition 3. The priority order pattern identified in the learning dataset 122A is the desired condition 1 > the desired condition 3 > the desired condition 2.

Therefore, the priority order pattern learning unit 273 extracts the desired condition 1 > the desired condition 2 > the desired condition 3 and the desired condition 1 > the desired condition 3 > the desired condition 2 as priority order patterns different from each other, gives pattern numbers to the respective different priority order patterns, thereby obtaining the intermediate data 212.

In the intermediate data 212, a pattern number "pattern A" is associated with the priority order pattern of the desired condition 1 > the desired condition 2 > the desired condition 3, and a pattern number "pattern B" is associated with the priority order pattern of the desired condition 1 > the desired condition 3 > the desired condition 2.

Next, the priority order pattern learning unit 273 calculates an edit distance between the pattern A and the priority order pattern for each learning dataset.

The priority order pattern learning unit 273 first compares the pattern A with the priority order pattern identified in the learning dataset 121A. In this case, the edit distance $d = 0$ holds because the two patterns are the same and request no edit operation to be equalized to each other.

Next, the pattern A is compared with the priority order pattern identified in the learning dataset 122A. In this case, the priority order pattern identified in the learning dataset 122A requests two edit operations to be equalized to the pattern A, the two edit operations including replacing the desired condition 2 with the desired condition 3, and replacing the desired condition 3 with the desired condition 2. Therefore, the edit distance $d = 2$ holds in this case.

In this way, the priority order pattern learning unit 273 obtains the numbers of edit operations requested to be equalized to the priority order patterns identified in the respective learning datasets, and calculates the total sum thereof.

In the example of FIG. 20, the total sum of the edit distances for the pattern A is 2. The priority order pattern learning unit 273 associates the pattern A with the edit distances to the priority order patterns in the respective learning datasets in the intermediate data 213.

The priority order pattern learning unit 273 performs the same process for the pattern B to obtain the total sum of the edit distances for the pattern B. In the example of FIG. 20, the total sum of the edit distances for the pattern B is 10. The priority order pattern learning unit 273 associates the pattern B with the edit distances to the priority order patterns in the respective learning datasets in the intermediate data 213.

Next, the priority order pattern learning unit 273 determines a pattern to be a learned pattern based on the intermediate data 213.

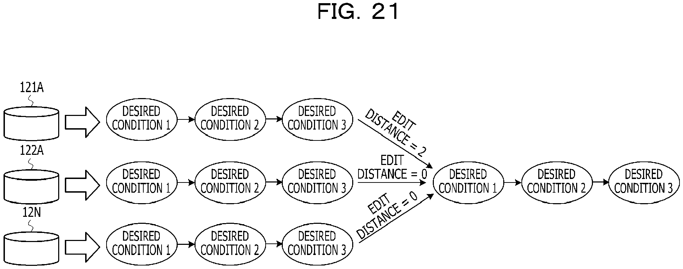

FIG. 21 is an eighth diagram for explaining the learning of the priority order pattern. The priority order pattern learning unit 273 determines, as a learned pattern, the pattern A having the smallest total sum of the edit distances in the intermediate data 213. The priority order pattern learning unit 273 causes the learned pattern holding unit 274 to hold the learned pattern information 275 indicating the learned pattern.

The pattern with the smallest total sum of the edit distances indicates that the priority order patterns identified in the respective learning datasets are similar to each other, for example.

In the present embodiment, as illustrated in FIG. 21, the pattern A having the smallest total sum of the edit distances to the respective priority order patterns of the desired condition identified in the learning dataset 121A, the learning dataset 122A, and the learning dataset 12N is determined as the learned pattern.

The priority order pattern of the desired conditions specified by the learned pattern is the desired condition 1 > the desired condition 2 > the desired condition 3.

From the above, the learned pattern information 275 in the present embodiment may be said to be an example of priority order pattern information indicating the order of priority of the plurality of desired conditions identified based on the actual match ratio, which is the ratio, concerning results obtained by assigning past assignment targets while applying each desired condition for an assignment, between the results satisfying the constraint condition for the assignment and the results matching the past assignment results.

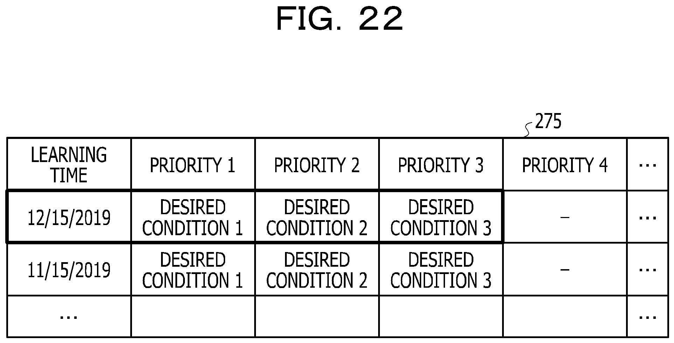

Next, an example of the learned pattern information 275 in the present embodiment will be described with reference to FIG. 22. FIG. 22 is a diagram presenting an example of learned pattern information.

The learned pattern information 275 in the present embodiment includes, as information fields, a learning time, a priority 1, a priority 2, a priority 3, and so on. The value in the field "learning time" indicates a time at which the process by the learning processing unit 270 was executed. For example, the value in the field "learning time" specifies a time at which the learned pattern was determined.

The fields "priority 1", "priority 2", "priority 3", and so on are associated with the field "learning time", and the values in the respective fields specify the learned pattern.

In the following description, information in which a learning time and a learned pattern are associated with each other will be referred to as learned pattern information 275.

In the example of FIG. 22, it is seen that the learned pattern determined in the learning process on 2019/12/15 is the desired condition 1 > the desired condition 2 > the desired condition 3.

In the present embodiment, from among the plurality of priority order patterns respectively identified from the plurality of learning datasets, the priority order pattern most similar to the plurality of priority order patterns is determined by using the edit distances as described above, and is set as the learned pattern.

In the present embodiment, for example, even in a case where the number of records included in a learning dataset is small, this process is capable of reducing an influence of the number of the records.

For example, in the case where the learning dataset is thinned out by removing records therefrom at step S1305 in FIG. 13 or the like, the number of records in the learning dataset used in the process at the subsequent step S1304 decreases. When the number of records included in the learning dataset decreases, there is a possibility that a desired condition for which the actual match ratio is accidentally high appears.

In the present embodiment, the learned pattern is determined by using the total sum of the edit distances so that the influence of the number of records of learning dataset may be avoided.

The above description explains the process by the learning processing unit 270.

Next, a process by the assignment processing unit 280 in the present embodiment will be described. The assignment processing unit 280 in the present embodiment performs an assignment based on the learned pattern information 275 held in the learned pattern holding unit 274 and newly input assignment target information and assignee information.

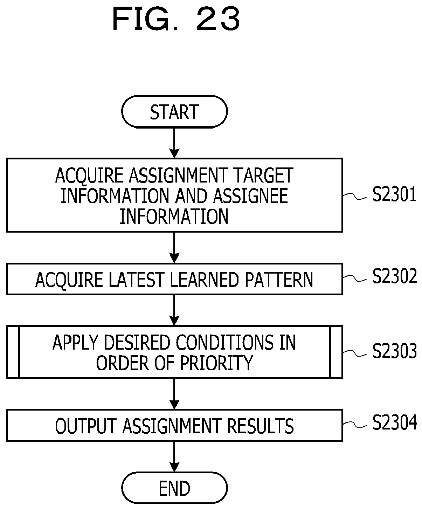

FIG. 23 is a first flowchart for explaining the process by the assignment processing unit in the information processing apparatus. The assignment processing unit 280 in the present embodiment causes the input reception unit 281 to receive an input of the assignment target information and the assignee information from the terminal device 300 and thereby acquires these kinds of information (step S2301).

Subsequently, the assignment processing unit 280 causes the assignment execution unit 282 to acquire the learned pattern information 275 having the latest learning time out of the learned pattern information 275 held in the learned pattern holding unit 274 (step S2302).

Next, the assignment execution unit 282 performs an assignment with the desired conditions applied according to the order of priority indicated by the learned pattern information 275 (step S2303). The process at step S2303 will be described in detail later.

Subsequently, the assignment processing unit 280 causes the output unit 283 to output the assignment results to the terminal device 300 (step S2304), and ends the process. In this process, the output unit 283 stores the assignment results in the past assignment database 250 as past assignment information associated with the assignment target information and the assignee information acquired at step S2401.

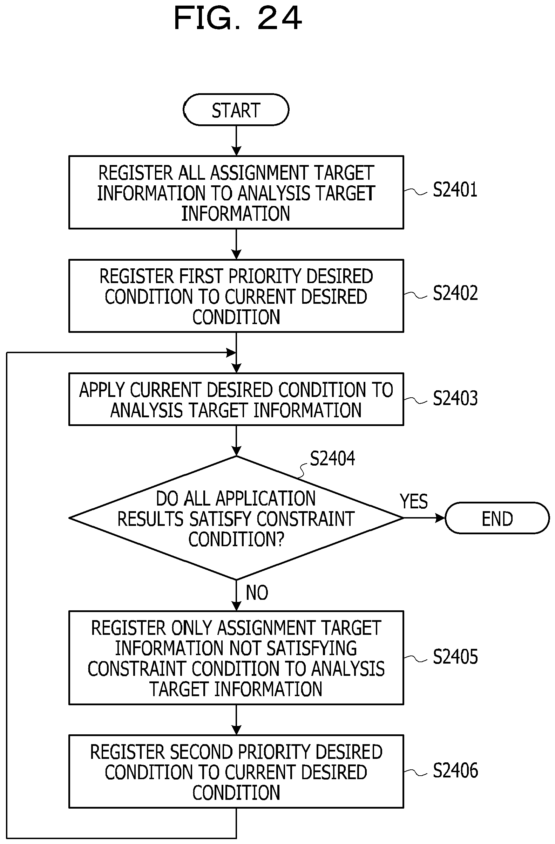

Next, details of the assignment performed by the assignment execution unit 282 will be described with reference to FIG. 24. FIG. 24 is a second flowchart for explaining the process by the assignment processing unit in the information processing apparatus. FIG. 24 presents details of step S2303 in FIG. 23.

The assignment execution unit 282 in the present embodiment registers, as analysis target information, all the assignment target information acquired by the input reception unit 281 (step S2401).

Subsequently, the assignment execution unit 282 registers the desired condition that is the value in the field "priority 1" in the acquired learned pattern information 275 as a current desired condition (step S2402).

Next, the assignment execution unit 282 executes an assignment with application of the current desired condition for the registered analysis target information (step S2403).

Subsequently, the assignment execution unit 282 determines whether all the application results obtained by executing the assignment satisfy the constraint condition (step S2404). If all the application results satisfy the constraint condition at step S2404, the assignment execution unit 282 ends the process.

If not all the application results satisfy the constraint condition at step S2404, then the assignment execution unit 282 registers, as the analysis target information, only the assignment target information not satisfying the constraint condition (step S2405).

Subsequently, the assignment execution unit 282 registers the desired condition with the next highest priority as the current desired condition (step S2406), and returns to step S2403.

In the present embodiment, if none of the application results obtained by applying the current desired condition to the current analysis target information satisfies the constraint condition, the process may proceed to step S2406.

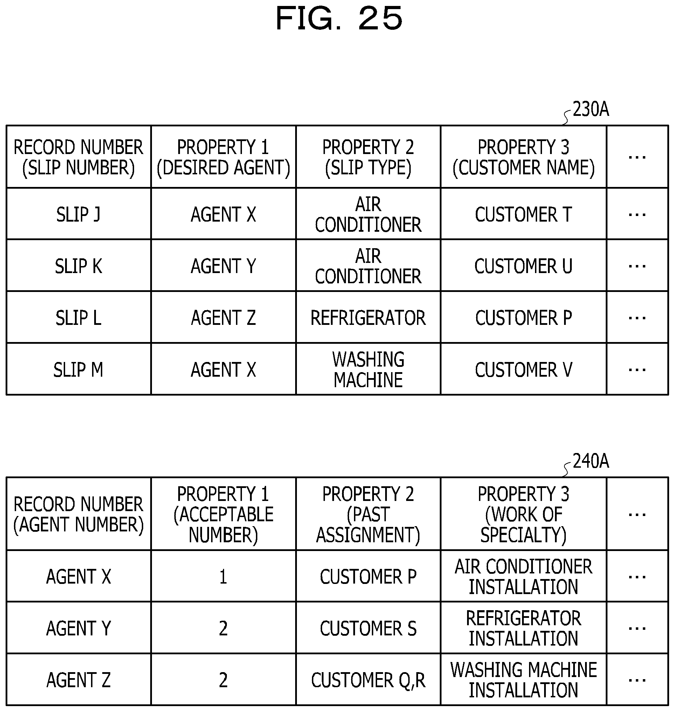

Hereinafter, the process by the assignment processing unit 280 in the present embodiment will be described in detail with reference to FIGs. 25 to 28.

FIG. 25 is a first diagram for explaining the assignment process. FIG. 25 presents new assignment target information 230A and assignee information 240A acquired by the input reception unit 281.

The assignment target information 230A in the present embodiment is information on tasks to be assigned to assignees. In the present embodiment, a delivery task is an example of the task. The information fields included in the assignment target information 230A are the same as those in the assignment target database 230, and therefore description thereof is omitted herein.

The assignee information 240A is information on assignees for the tasks specified in the assignment target information 230A. In the present embodiment, a delivery agent is an example of the assignee. The information fields included in the assignee information 240A are the same as those in the assignee database 240, and therefore description thereof is omitted herein.

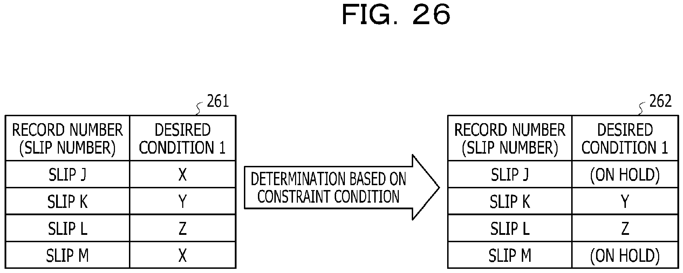

FIG. 26 is a second diagram for explaining the assignment process. The following description will be given of a case where the assignment target information 230A is acquired at step S2301 in FIG. 23 and the learned pattern information 275 with the learning time of "2019/12/15" is acquired at step S2302 in FIG. 23.

First, the assignment execution unit 282 sets all the records in the assignment target information 230A as the analysis target information, and sets the desired condition 1 specified in the priority 1 of the learned pattern information 275 as the current desired condition. The assignment execution unit 282 applies the desired condition 1 to the analysis target information.

In this case, the desired condition 1 is to assign an assignment target to an agent desired by the assignment target (see FIG. 3). Thus, as illustrated in intermediate data 261 in FIG. 26, the application results of the analysis target information containing a slip J and the analysis target information containing a slip M are an agent X, the application result of the analysis target information containing a slip K is an agent Y, and the application result of the analysis target information containing a slip L is an agent Z.

Next, the assignment execution unit 282 determines whether all the application results satisfy the constraint condition. The constraint condition herein is the acceptable number for each delivery agent (see FIG. 4). The acceptable number for the agent x is 1, and the acceptable numbers of the agent Y and the agent Z are 2.

Thus, the application result of the analysis target information containing the slip J and the application result of the analysis target information containing the slip M do not satisfy the constraint condition.

Thus, the assignment execution unit 282 puts the application results of the analysis target information containing the slip J and the analysis target information containing the slip M on hold while determining the application result of the analysis target information containing the slip K and the application result of the analysis target information containing the slip L satisfying the constraint condition. Intermediate data 262 in FIG. 26 illustrates a state where the application results of the slips J and M are put on hold and the application results of the slips K and L are determined.

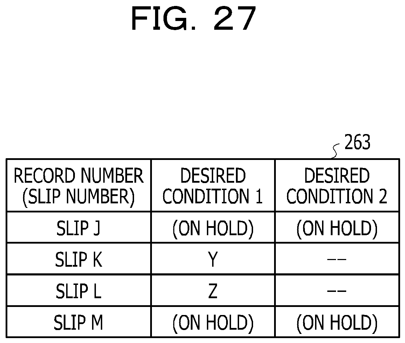

FIG. 27 is a second diagram for explaining the assignment process. The assignment execution unit 282 sets, as the current analysis target information, the assignment target information for which the application result is put on hold in the intermediate data 262. For example, the assignment execution unit 282 sets, as the current analysis target information, the assignment target information in which the value of the slip number is the slip J and the assignment target information in which the value of the slip number is the slip M.

The assignment execution unit 282 sets the desired condition 2 specified in the priority 2 of the learned pattern information 275 as the current desired condition. Then, the assignment execution unit 282 applies the desired condition 2 to the current analysis target information.

The desired condition 2 is to assign an assignment target to an agent having carried out a past assignment of a delivery to the customer concerned (see FIG. 3).

In the case of applying the desired condition 2 to the current analysis target information, neither of the slips J and M satisfies the desired condition 2 because the customer name associated with the slip J is a customer T, and a customer name associated with the slip M is the customer V. Therefore, the assignment execution unit 282 sets the desired condition 3 as the current desired condition.

Intermediate data 263 in FIG. 27 presents a state where the application results obtained by applying the desired condition 2 to the slips J and M are put on hold.

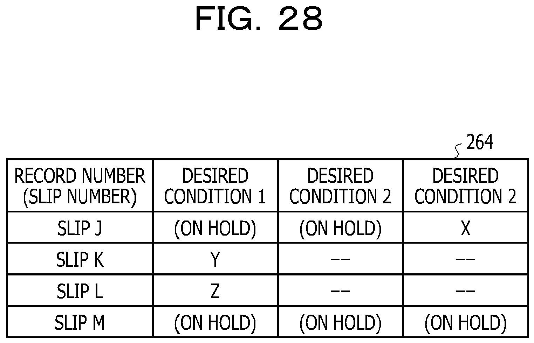

FIG. 28 is a third diagram for explaining the assignment process. The assignment execution unit 282 sets, as the current analysis target information, the assignment target information in which the value of the slip number is the slip J and the assignment target information in which the value of the slip number is the slip M, for which the assignment results are put on hold in the intermediate data 263. The assignment execution unit 282 sets the desired condition 3 specified in the priority 3 of the learned pattern information 275 as the current desired condition. The assignment execution unit 282 applies the desired condition 3 to the current analysis target information.

The desired condition 3 is to identify a work to be requested depending on a slip type and assign the work to an agent skillful at the work (see FIG. 3).

In this regard, the slip type of the slip J is "air conditioner", the slip type of the slip M is "washing machine", a work of specialty of the agent X is "air conditioner installation", and a work of specialty of the agent Z is "washing machine installation" (see FIG. 25).

Thus, the application result for the assignment target information containing the slip J is the agent X, and the application result for the assignment target information containing the slip M is the agent Z.

Intermediate data 265 in FIG. 28 presents a state where the application results of all the input assignment target information are determined.

In this state, all the application results of the assignment target information satisfy the constraint condition. Therefore, the assignment execution unit 282 outputs the application results presented in the intermediate data 264 as the results of executing the assignment according to the order of priority of the desired conditions in the state where the constraint condition is satisfied.

In the present embodiment, as described above, the use of the learned pattern information 275 learned by using the past assignment information enables the assignment results to be obtained according to the order of priority of the desired conditions in the state where the constraint condition is satisfied.

For example, in response to an input of the assignment target information, the assignee information, and the constraint condition, the information processing apparatus 200 in the present embodiment outputs assignment results according to the order of priority of the desired conditions in the state where the constraint condition is satisfied, in accordance with the learned pattern information generated by learning using the past assignments.

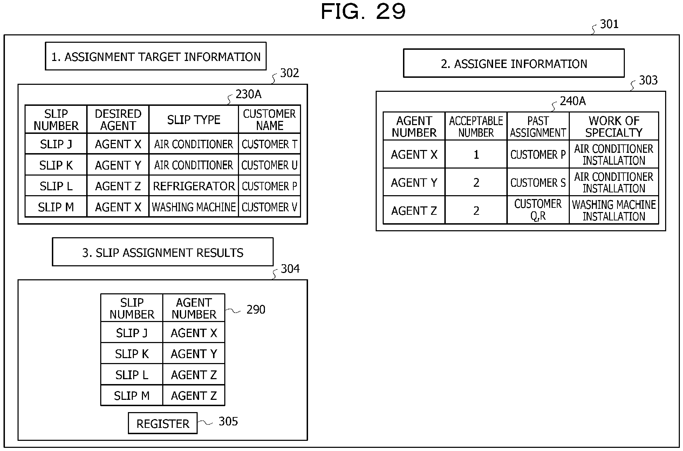

FIG. 29 is a diagram illustrating a display example of the assignment results. When the assignment execution unit 282 performs an assignment, the assignment processing unit 280 in the present embodiment causes the output unit 283 to display the results on the terminal device 300.

A screen 301 illustrated in FIG. 29 is an example of a screen on which the assignment results are displayed. In the present embodiment, the screen 301 is displayed on the terminal device 300, but the display place is not limited thereto. For example, the screen 301 may be displayed on a device other than the terminal device 300. For example, the screen 301 may be displayed on a display of the information processing apparatus 200.

The screen 301 includes display sections 302, 303, and 304. The input assignment target information 230A is displayed in the display section 302. The input assignee information 240A is displayed in the display section 303.

The assignment results 290 are displayed in the display section 304. The assignment results 290 are the same as the information presented in the intermediate data 264. The display section 304 includes an operation button 305. In the present embodiment, when the operation button 305 is operated, a business flow using the assignment results 290 may start to be conducted.

In the example illustrated in FIG. 29, the assignment target information 230A and the assignee information 240A are displayed on the screen 301, but the screen 301 is not limited thereto. The screen 301 only has to display the assignment results 290, and may not display the assignment target information 230A and the assignee information 240A.

In the present embodiment, by notifying the user of the terminal device 300 of the assignment results 290 as described above, it is possible to provide the user of the information processing system 100 with the assignment results obtained by applying the desired conditions in descending order of priority while satisfying the constraint condition.

In the disclosed technology, modes such as appendices described below are conceivable.

The present disclosure is not limited to the specifically disclosed embodiment, and various modifications and changes may be made without departing from the scope of the appended claims.

**Claims**

1. An information processing method by a computer, causing the computer to execute a process comprising:

   receiving an input of assignment target information on assignment targets and assignee information on assignees;

   referring to priority order pattern information indicating an order of priority of a plurality of desired conditions identified based on a ratio, in result information pieces obtained by assigning past assignment targets to the assignees by applying each of the plurality of desired conditions, between the number of the result information pieces satisfying a constraint condition to be applied in an assignment of the assignment targets to the assignees and the number of the result information pieces including the assignee information matching the assignees determined according to the desired condition; and

   outputting results of assigning the assignment targets to the assignees such that the desired conditions are satisfied according to the order of priority.

2. The information processing method according to claim 1, wherein
   the number of the result information pieces satisfying the constraint condition is obtained by subtracting the number of the result information pieces not satisfying the constraint condition from the number of the result information pieces obtained by assigning the past assignment targets to the assignees by applying each of the plurality of desired conditions, and
   the priority is given to the plurality of desired conditions in descending order of the ratio.

3. The information processing method according to claim 1 or 2, wherein
   records indicating results of assigning the past assignment targets by applying the plurality of desired conditions are divided by each time of the assignment, to generate a plurality of learning datasets,
   a ratio between results satisfying the constraint condition and results matching past assignment results is calculated for each of the plurality of learning datasets,
   pattern information indicating an order of priority of the plurality of desired conditions is generated based on the ratio for each of the plurality of learning datasets, and
   the priority order pattern information is generated from the pattern information for all the plurality of learning datasets.

4. The information processing method according to claim 3, wherein
   for each of the plurality of learning datasets
   the desired condition with the highest priority is identified based on the ratio,
   the learning dataset is thinned out by removing a record satisfying the identified desired condition, and
   the desired condition with the highest priority identified based on the ratio calculated from the thinned learning dataset is set as a desired condition with the second priority in the pattern information for the learning dataset.

5. The information processing method according to claim 3 or 4, wherein
   common pattern information pieces are extracted from the pattern information for the plurality of learning datasets, and
   among the common pattern information pieces, the pattern information piece for which the number of edit operations for equalizing the pattern information piece to the other pattern information pieces is smallest is set as the priority order pattern information.

6. The information processing method according to any one of claims 1 to 5, wherein

the assignment target information, the assignee information, and results of assigning the input assignment targets to the input assignees are displayed on a terminal device.

7.  An information processing method by a computer, causing the computer to execute a process comprising:

    acquiring a learning dataset including application results for each of a plurality of desired conditions in a case of assigning past assignment targets by applying the plurality of desired conditions and past assignment results for the past assignment targets, and acquiring constraint condition information indicating a constraint condition in an assignment;
    for each of the plurality of desired conditions, calculating a ratio of the application results matching the past assignment results, to results obtained by subtracting the application results not satisfying the constraint condition from all the application results; and
    identifying a priority order pattern indicating an order of priority of the plurality of desired conditions based on the ratios for the respective desired conditions.

8.  An information processing program causing a computer to execute a process comprising:

    receiving an input of assignment target information on assignment targets and assignee information on assignees;
    referring to priority order pattern information indicating an order of priority of a plurality of desired conditions identified based on a ratio, in result information pieces obtained by assigning past assignment targets to the assignees by applying each of the plurality of desired conditions, between the number of the result information pieces satisfying a constraint condition to be applied in an assignment of the assignment targets to the assignees and the number of the result information pieces including the assignee information matching the assignees determined according to the desired condition; and
    outputting results of assigning the assignment targets to the assignees such that the desired conditions are satisfied according to the order of priority.

9.  An information processing apparatus comprising:

    an assignment request reception unit that receives an input of assignment target information on assignment targets and assignee information on assignees; and
    an assignment processing unit that refers to priority order pattern information indicating an order of priority of a plurality of desired conditions identified based on a ratio, in result information pieces obtained by assigning past assignment targets to the assignees by applying each of the plurality of desired conditions, between the number of the result information pieces satisfying a constraint condition to be applied in an assignment of the assignment targets to the assignees and the number of the result information pieces including the assignee information matching the assignees determined according to the desired condition, and outputs results of assigning the assignment targets to the assignees such that the desired conditions are satisfied according to the order of priority.

# FIG. 1

100

TERMINAL DEVICE 300

200 INFORMATION PROCESSING APPARATUS

210 DESIRED CONDITION DB

220 CONSTRAINT CONDITION DB

230 ASSIGNMENT TARGET DB

240 ASSIGNEE DB

250 PAST ASSIGNMENT DB

260 ASSIGNMENT REQUEST RECEPTION UNIT

270 LEARNING PROCESSING UNIT

280 ASSIGNMENT PROCESSING UNIT

# FIG. 2

FIG. 3

210

| DESIRED CONDITION NUMBER | SPECIFICATION | RELEVANT PROPERTY |
|---|---|---|
| DESIRED CONDITION 1 (SLIP'S DESIRE) | ASSIGN SLIP TO DESIRED AGENT IN SLIP. | PROPERTY OF ASSIGNMENT TARGET: "DESIRED AGENT" |
| DESIRED CONDITION 2 (PAST ASSIGNMENT) | FIRST, IDENTIFY AGENT HAVING CARRIED OUT PAST ASSIGNMENT BASED ON CUSTOMER NAME OF SLIP. ASSIGN SLIP TO AGENT HAVING CARRIED OUT PAST ASSIGNMENT | PROPERTY OF ASSIGNEE: "PAST ASSIGNMENT" PROPERTY OF ASSIGNMENT TARGET: "CUSTOMER NAME" |
| DESIRED CONDITION 3 (AGENT'S SERVICE) | FIRST, IDENTIFY REQUESTED WORK DEPENDING ON SLIP TYPE. ASSIGN SLIP TO AGENT SKILLFUL AT IDENTIFIED WORK. | PROPERTY OF ASSIGNEE: "WORK OF SPECIALTY" PROPERTY OF ASSIGNMENT TARGET: "SLIP TYPE" |
| ... | ... | ... |

FIG. 4

220

| CONSTRAINT CONDITION NUMBER | SPECIFICATION | RELEVANT PROPERTY |
|---|---|---|
| CONSTRAINT CONDITION 1 (ACCEPTABLE NUMBER) | DO NOT ASSIGN AGENT LARGER NUMBER OF SLIPS THAN ACCEPTABLE NUMBER FOR AGENT IN ONE ASSIGNMENT | PROPERTY OF ASSIGNEE: "ACCEPTABLE NUMBER" |
| ... | ... | ... |

# FIG. 5

230

| RECORD NUMBER (SLIP NUMBER) | PROPERTY 1 (DESIRED AGENT) | PROPERTY 2 (SLIP TYPE) | PROPERTY 3 (CUSTOMER NAME) | ... |
|---|---|---|---|---|
| SLIP D | AGENT X | WASHING MACHINE | CUSTOMER P | ... |
| SLIP E | AGENT Y | AIR CONDITIONER | CUSTOMER Q | ... |
| SLIP F | AGENT X | WASHING MACHINE | CUSTOMER R | ... |
| SLIP G | AGENT X | REFRIGERATOR | CUSTOMER S | ... |

# FIG. 6

240

| RECORD NUMBER (AGENT NUMBER) | PROPERTY 1 (ACCEPTABLE NUMBER) | PROPERTY 2 (PAST ASSIGNMENT) | PROPERTY 3 (WORK OF SPECIALTY) | ... |
|---|---|---|---|---|
| AGENT X | 1 | CUSTOMER P | AIR CONDITIONER INSTALLATION | ... |
| AGENT Y | 2 | CUSTOMER S | REFRIGERATOR INSTALLATION | ... |
| AGENT Z | 2 | CUSTOMER Q,R | WASHING MACHINE INSTALLATION | ... |

## FIG. 7

250

| ASSIGNMENT TIME | ASSIGNMENT TARGET INFORMATION | | | | | ASSIGNEE INFORMATION | | | | |
|---|---|---|---|---|---|---|---|---|---|---|
| | RECORD NUMBER (SLIP NUMBER) | PROPERTY 1 (DESIRED AGENT) | PROPERTY 2 (SLIP TYPE) | PROPERTY 3 (CUSTOMER NAME) | ... | RECORD NUMBER (AGENT NUMBER) | PROPERTY 1 (ACCEPTABLE NUMBER) | PROPERTY 2 (PAST ASSIGNMENT) | PROPERTY 3 (WORK OF SPECIALTY) | ... |
| 12/12/2019 | SLIP D | AGENT X | WASHING MACHINE | CUSTOMER P | ... | AGENT X | 1 | CUSTOMER P | AIR CONDITIONER INSTALLATION | ... |
| 12/12/2019 | SLIP E | AGENT Y | AIR CONDITIONER | CUSTOMER Q | ... | AGENT Y | 2 | CUSTOMER S | REFRIGERATOR INSTALLATION | ... |
| 12/12/2019 | SLIP F | AGENT X | WASHING MACHINE | CUSTOMER R | ... | AGENT Z | 2 | CUSTOMER Q,R | WASHING MACHINE INSTALLATION | ... |
| 12/12/2019 | SLIP G | AGENT X | REFRIGERATOR | CUSTOMER S | ... | AGENT Y | 2 | CUSTOMER S | REFRIGERATOR INSTALLATION | ... |
| ... | ... | ... | ... | ... | ... | ... | ... | ... | ... | ... |
| 12/13/2019 | SLIP A | AGENT X | AIR CONDITIONER | CUSTOMER P | ... | AGENT X | 1 | CUSTOMER P | AIR CONDITIONER INSTALLATION | ... |
| ... | ... | ... | ... | ... | ... | ... | ... | ... | ... | ... |

24

# FIG. 8

# FIG. 9

```
        ┌─────────────┐
        │    START    │
        └──────┬──────┘
               │
               ▼
   ┌──────────────────────────┐
   │ RECEIVE ASSIGNMENT REQUEST│ ～ S901
   └──────────────┬───────────┘
                  │
                  ▼
   ┌┤ LEARNING PROCESS ├┐        ～ S902
   └──────────────┬───────────┘
                  │
                  ▼
   ┌┤ ASSIGNMENT PROCESS ├┐      ～ S903
   └──────────────┬───────────┘
                  │
                  ▼
        ┌─────────────┐
        │     END     │
        └─────────────┘
```

# FIG. 10

```
        ┌─────────┐
        │  START  │
        └─────────┘
             │
             ▼
┌───────────────────────────────┐
│    ACQUIRE PAST ASSIGNMENT     │ ～ S1001
│          INFORMATION           │
└───────────────────────────────┘
             │
             ▼
┌───────────────────────────────┐
│    ACQUIRE DESIRED CONDITION   │
│  INFORMATION AND CONSTRAINT    │ ～ S1002
│      CONDITION INFORMATION     │
└───────────────────────────────┘
             │
             ▼
┌───────────────────────────────┐
│   APPLY EACH DESIRED CONDITION TO  │ ～ S1003
│   PAST ASSIGNMENT INFORMATION  │
└───────────────────────────────┘
             │
             ▼
┌───────────────────────────────┐
│   PERFORM DATA DIVISION BY TIME │ ～ S1004
└───────────────────────────────┘
             │
             ▼
┌┃─────────────────────────────┃┐
│┃       LEARNING PROCESS       ┃│ ～ S1005
└┃─────────────────────────────┃┘
             │
             ▼
        ┌─────────┐
        │   END   │
        └─────────┘
```

## FIG. 11A

111

| ASSIGNMENT TIME | ASSIGNMENT TARGET INFORMATION | | | | | ASSIGNEE INFORMATION | | | | |
|---|---|---|---|---|---|---|---|---|---|---|
| | RECORD NUMBER (SLIP NUMBER) | PROPERTY 1 (DESIRED AGENT) | PROPERTY 2 (SLIP TYPE) | PROPERTY 3 (CUSTOMER NAME) | ⋯ | RECORD NUMBER (AGENT NUMBER) | PROPERTY 1 (ACCEPTABLE NUMBER) | PROPERTY 2 (PAST ASSIGNMENT) | PROPERTY 3 (WORK OF SPECIALTY) | ⋯ |
| 12/12/2019 | SLIP D | AGENT X | WASHING MACHINE | CUSTOMER P | ⋯ | AGENT X | 1 | CUSTOMER P | AIR CONDITIONER INSTALLATION | ⋯ |
| 12/12/2019 | SLIP E | AGENT Y | AIR CONDITIONER | CUSTOMER Q | ⋯ | AGENT Y | 2 | CUSTOMER S | REFRIGERATOR INSTALLATION | ⋯ |
| 12/12/2019 | SLIP F | AGENT X | WASHING MACHINE | CUSTOMER R | ⋯ | AGENT Z | 2 | CUSTOMER Q,R | WASHING MACHINE INSTALLATION | ⋯ |
| 12/12/2019 | SLIP G | AGENT X | REFRIGERATOR | CUSTOMER S | ⋯ | AGENT Y | 2 | CUSTOMER S | REFRIGERATOR INSTALLATION | ⋯ |
| | | | | | | | | | | |
| 12/13/2019 | SLIP A | AGENT X | AIR CONDITIONER | CUSTOMER P | ⋯ | AGENT X | 1 | CUSTOMER P | AIR CONDITIONER INSTALLATION | ⋯ |
| | | | | | | | | | | |

# FIG. 11B

| DESIRED CONDITION APPLICATION RESULT | | |
|---|---|---|
| DESIRED CONDITION 1 | DESIRED CONDITION 2 | DESIRED CONDITION 3 |
| X | X | Z |
| Y | Z | X |
| X | Z | Z |
| X | Y | Y |
| | | |
| X | X | X |
| | | |

## FIG. 12A

121

| RECORD NUMBER (SLIP NUMBER) | PROPERTY 1 (DESIRED AGENT) | PROPERTY 2 (SLIP TYPE) | PROPERTY 3 (CUSTOMER NAME) | ⋯ | RECORD NUMBER (AGENT NUMBER) | PROPERTY 1 (ACCEPTABLE NUMBER) | PROPERTY 2 (PAST ASSIGNMENT) | PROPERTY 3 (WORK OF SPECIALTY) | ⋯ |
|---|---|---|---|---|---|---|---|---|---|
| SLIP D | AGENT X | WASHING MACHINE | CUSTOMER P | ⋯ | AGENT X | 1 | CUSTOMER P | AIR CONDITIONER INSTALLATION | ⋯ |
| SLIP E | AGENT Y | AIR CONDITIONER | CUSTOMER Q | ⋯ | AGENT Y | 2 | CUSTOMER S | REFRIGERATOR INSTALLATION | ⋯ |
| SLIP F | AGENT X | WASHING MACHINE | CUSTOMER R | ⋯ | AGENT Z | 2 | CUSTOMER Q,R | WASHING MACHINE INSTALLATION | ⋯ |
| SLIP G | AGENT X | REFRIGERATOR | CUSTOMER S | ⋯ | AGENT Y | 2 | CUSTOMER S | REFRIGERATOR INSTALLATION | ⋯ |

| DESIRED CONDITION APPLICATION RESULT | | |
|---|---|---|
| DESIRED CONDITION 1 | DESIRED CONDITION 2 | DESIRED CONDITION 3 |
| X | X | Z |
| Y | Z | X |
| X | Z | Z |
| X | Y | Y |

FIG. 12B

122

| RECORD NUMBER (SLIP NUMBER) | PROPERTY 1 (DESIRED AGENT) | PROPERTY 2 (SLIP TYPE) | PROPERTY 3 (CUSTOMER NAME) | ... | RECORD NUMBER (AGENT NUMBER) | PROPERTY 1 (ACCEPTABLE NUMBER) | PROPERTY 2 (PAST ASSIGNMENT) | PROPERTY 3 (WORK OF SPECIALTY) | ... |
|---|---|---|---|---|---|---|---|---|---|
| SLIP A | AGENT X | AIR CONDITIONER | CUSTOMER P | ... | AGENT X | 1 | CUSTOMER P | AIR CONDITIONER INSTALLATION | ... |

| DESIRED CONDITION APPLICATION RESULT | | |
|---|---|---|
| DESIRED CONDITION 1 | DESIRED CONDITION 2 | DESIRED CONDITION 3 |
| X | X | X |

# FIG. 13

START

LOOP PROCESS FOR NUMBER OF LEARNING DATASETS — S1301

READ ONE LEARNING DATASET — S1302

S1303

HAS PROCESS BEEN COMPLETED FOR ALL DESIRED CONDITIONS?

YES

NO

DETERMINE FIRST PRIORITY DESIRED CONDITION IN CONSIDERATION OF CONSTRAINT OVERFLOW — S1304

REMOVE RESULTS — S1305

S1306

OBTAIN LEARNED PATTERN INFORMATION BASED ON EDIT DISTANCES AND HOLD LEARNED PATTERN INFORMATION — S1307

END

# FIG. 14

121A

| SLIP NUMBER | APPLICATION RESULT | | | AGENT NUMBER |
|---|---|---|---|---|
| | DESIRED CONDITION 1 | DESIRED CONDITION 2 | DESIRED CONDITION 3 | |
| SLIP D | AGENT X | AGENT X | AGENT Z | AGENT X |
| SLIP E | AGENT Y | AGENT Z | AGENT X | AGENT Y |
| SLIP F | AGENT X | AGENT Z | AGENT Z | AGENT Z |
| SLIP G | AGENT X | AGENT Y | AGENT Y | AGENT Y |

220A

| AGENT NUMBER | ACCEPTABLE NUMBER |
|---|---|
| AGENT X | 1 |
| AGENT Y | 2 |
| AGENT Z | 2 |

FIG. 15

| SLIP NUMBER | APPLICATION RESULT | | | AGENT NUMBER |
|---|---|---|---|---|
| | DESIRED CONDITION 1 | DESIRED CONDITION 2 | DESIRED CONDITION 3 | |
| SLIP D | AGENT X | AGENT X | AGENT Z | AGENT X |
| SLIP E | AGENT Y | AGENT Z | AGENT X | AGENT Y |
| SLIP F | AGENT X | AGENT Z | AGENT Z | AGENT Z |
| SLIP G | AGENT X | AGENT Y | AGENT Y | AGENT Y |

121A

| AGENT NUMBER | ACCEPTABLE NUMBER |
|---|---|
| AGENT X | 1 |
| AGENT Y | 2 |
| AGENT Z | 2 |

220A

121A

IDENTIFY PRIORITY ORDER PATTERN SPECIFIC TO LEARNING DATASET 121A

DESIRED CONDITION 1   DESIRED CONDITION 2   DESIRED CONDITION 3

122A

IDENTIFY PRIORITY ORDER PATTERN SPECIFIC TO LEARNING DATASET 122A

DESIRED CONDITION 1   DESIRED CONDITION 2   DESIRED CONDITION 3

...

12N

IDENTIFY PRIORITY ORDER PATTERN SPECIFIC TO LEARNING DATASET 12N

DESIRED CONDITION 1   DESIRED CONDITION 2   DESIRED CONDITION 3

## FIG. 16

⌐121A

| SLIP NUMBER | APPLICATION RESULT | | | AGENT NUMBER |
|---|---|---|---|---|
| | DESIRED CONDITION 1 | DESIRED CONDITION 2 | DESIRED CONDITION 3 | |
| SLIP D | AGENT X | AGENT X | AGENT Z | AGENT X |
| SLIP E | AGENT Y | AGENT Z | AGENT X | AGENT Y |
| SLIP F | AGENT X | AGENT Z | AGENT Z | AGENT Z |
| SLIP G | AGENT X | AGENT Y | AGENT Y | AGENT Y |

⌐220A

| AGENT NUMBER | ACCEPTABLE NUMBER |
|---|---|
| AGENT X | 1 |
| AGENT Y | 2 |
| AGENT Z | 2 |

⌐161

| | DESIRED CONDITION 1 | DESIRED CONDITION 2 | DESIRED CONDITION 3 |
|---|---|---|---|
| AGENT X | 2 (=3-1) | 0 | 0 |
| AGENT Y | 0 | 0 | 0 |
| AGENT Z | 0 | 0 | 0 |
| TOTAL NUMBER OF CONSTRAINT OVERFLOWS | 2 | 0 | 0 |
| ACTUAL MATCH RATIO | $\frac{2}{4-2}$ | $\frac{3}{4-0}$ | $\frac{2}{4-0}$ |
| | (=1) | (=0.75) | (=0.5) |

FIRST PRIORITY DESIRED CONDITION = "DESIRED CONDITION 1"

# FIG. 17

121A'

| SLIP NUMBER | APPLICATION RESULT | | | AGENT NUMBER |
|---|---|---|---|---|
| | DESIRED CONDITION 1 | DESIRED CONDITION 2 | DESIRED CONDITION 3 | |
| SLIP D | AGENT X | AGENT X | AGENT Z | AGENT X |
| SLIP E | AGENT Y | AGENT Z | AGENT X | AGENT Y |
| SLIP F | AGENT X | AGENT Z | AGENT Z | AGENT Z |
| SLIP G | AGENT X | AGENT Y | AGENT Y | AGENT Y |

220B

| CONSTRAINT CONDITION |
|---|
| ASSIGN SLIPS E AND F TO SAME AGENT |

171

| | DESIRED CONDITION 1 | DESIRED CONDITION 2 | DESIRED CONDITION 3 |
|---|---|---|---|
| CONSTRAINT OVERFLOW OF SLIP D | 0 | 0 | 0 |
| CONSTRAINT OVERFLOW OF SLIP E | 1 | 0 | 1 |
| CONSTRAINT OVERFLOW OF SLIP F | 1 | 0 | 1 |
| CONSTRAINT OVERFLOW OF SLIP G | 0 | 0 | 0 |
| TOTAL NUMBER OF CONSTRAINT OVERFLOWS | 2 | 0 | 2 |
| ACTUAL MATCH RATIO | $\frac{2}{4-2}$ (=1) | $\frac{3}{4-0}$ (=0.75) | $\frac{1}{4-2}$ (=0.5) |

DESIRED CONDITION 1 → DESIRED CONDITION 2 → DESIRED CONDITION 3

EP 3 945 475 A1

## FIG. 18

*121A*

| SLIP NUMBER | APPLICATION RESULT | | | AGENT NUMBER |
| --- | --- | --- | --- | --- |
| | DESIRED CONDITION 1 | DESIRED CONDITION 2 | DESIRED CONDITION 3 | |
| SLIP D | AGENT X | AGENT X | AGENT Z | AGENT X |
| SLIP E | AGENT Y | AGENT Z | AGENT X | AGENT Y |
| SLIP F | AGENT X | AGENT Z | AGENT Z | AGENT Z |
| SLIP G | AGENT X | AGENT Y | AGENT Y | AGENT Y |

*220A*

| AGENT NUMBER | ACCEPTABLE NUMBER |
| --- | --- |
| AGENT X | 1 |
| AGENT Y | 2 |
| AGENT Z | 2 |

DESIRED CONDITION DETERMINATION

FIRST PRIORITY DESIRED CONDITION: DESIRED CONDITION 1

DATA THINNING

*121A*

| SLIP NUMBER | APPLICATION RESULT | | | AGENT NUMBER |
| --- | --- | --- | --- | --- |
| | DESIRED CONDITION 1 | DESIRED CONDITION 2 | DESIRED CONDITION 3 | |
| SLIP D | AGENT X | AGENT X | AGENT Z | AGENT X |
| SLIP E | AGENT Y | AGENT Z | AGENT X | AGENT Y |
| SLIP F | AGENT X | AGENT Z | AGENT Z | AGENT Z |
| SLIP G | AGENT X | AGENT Y | AGENT Y | AGENT Y |

*121a*

*220A*

| AGENT NUMBER | ACCEPTABLE NUMBER |
| --- | --- |
| AGENT X | 1 |
| AGENT Y | 2 |
| AGENT Z | 2 |

DESIRED CONDITION DETERMINATION

FIRST PRIORITY DESIRED CONDITION: DESIRED CONDITION 2

DATA THINNING

END OF CALCULATION

37

FIG. 19

IDENTIFY PRIORITY ORDER PATTERN SPECIFIC TO LEARNING DATASET 121A

121A

IDENTIFY PRIORITY ORDER PATTERN SPECIFIC TO LEARNING DATASET 122A

122A

IDENTIFY PRIORITY ORDER PATTERN SPECIFIC TO LEARNING DATASET 12N

12N

DESIRED CONDITION 1 DESIRED CONDITION 2 DESIRED CONDITION 3

DESIRED CONDITION 1 DESIRED CONDITION 2 DESIRED CONDITION 3

DESIRED CONDITION 1 DESIRED CONDITION 2 DESIRED CONDITION 3

EXTRACT COMMON PRIORITY ORDER PATTERN BASED ON EDIT DISTANCES

DESIRED CONDITION 1 DESIRED CONDITION 2 DESIRED CONDITION 3

# FIG. 20

211

| LEARNING DATASET NUMBER | PRIORITY 1 | PRIORITY 2 | PRIORITY 3 |
|---|---|---|---|
| 121A | DESIRED CONDITION 1 | DESIRED CONDITION 2 | DESIRED CONDITION 3 |

212

| PATTERN NUMBER | PRIORITY 1 | PRIORITY 2 | PRIORITY 3 |
|---|---|---|---|
| PATTERN A | DESIRED CONDITION 1 | DESIRED CONDITION 2 | DESIRED CONDITION 3 |
| PATTERN B | DESIRED CONDITION 1 | DESIRED CONDITION 3 | DESIRED CONDITION 2 |

213

| | PRIORITY ORDER PATTERN OF LEARNING DATASET 121A | PRIORITY ORDER PATTERN OF LEARNING DATASET 122A | ... | PRIORITY ORDER PATTERN OF LEARNING DATASET 12N | TOTAL SUM OF DISTANCES |
|---|---|---|---|---|---|
| PATTERN A | d=0 | d=2 | ... | d=0 | 2 |
| PATTERN B | d=2 | d=0 | ... | d=2 | 10 |

FIG. 21

# FIG. 22

| LEARNING TIME | PRIORITY 1 | PRIORITY 2 | PRIORITY 3 | PRIORITY 4 | ··· |
|---|---|---|---|---|---|
| 12/15/2019 | DESIRED CONDITION 1 | DESIRED CONDITION 2 | DESIRED CONDITION 3 | – | ··· |
| 11/15/2019 | DESIRED CONDITION 1 | DESIRED CONDITION 2 | DESIRED CONDITION 3 | – | ··· |
| ··· | | | | | ··· |

275

# FIG. 23

```
        ┌─────────┐
        │  START  │
        └─────────┘
             │
             ▼
┌────────────────────────────┐
│   ACQUIRE ASSIGNMENT TARGET │
│   INFORMATION AND ASSIGNEE  │⌇ S2301
│        INFORMATION          │
└────────────────────────────┘
             │
             ▼
┌────────────────────────────┐
│ ACQUIRE LATEST LEARNED PATTERN │⌇ S2302
└────────────────────────────┘
             │
             ▼
┌────────────────────────────┐
│║  APPLY DESIRED CONDITIONS IN │
│║     ORDER OF PRIORITY        │⌇ S2303
└────────────────────────────┘
             │
             ▼
┌────────────────────────────┐
│   OUTPUT ASSIGNMENT RESULTS  │⌇ S2304
└────────────────────────────┘
             │
             ▼
        ┌─────────┐
        │   END   │
        └─────────┘
```

# FIG. 24

```
                    ┌─────────────┐
                    │    START    │
                    └──────┬──────┘
                           ↓
          ┌──────────────────────────────────┐
          │ REGISTER ALL ASSIGNMENT TARGET    │
          │ INFORMATION TO ANALYSIS TARGET    │──── S2401
          │ INFORMATION                       │
          └──────────────┬───────────────────┘
                         ↓
          ┌──────────────────────────────────┐
          │ REGISTER FIRST PRIORITY DESIRED   │
          │ CONDITION TO CURRENT DESIRED      │──── S2402
          │ CONDITION                         │
          └──────────────┬───────────────────┘
                         ↓
          ┌──────────────────────────────────┐
          │ APPLY CURRENT DESIRED CONDITION TO│──── S2403
          │ ANALYSIS TARGET INFORMATION       │
          └──────────────┬───────────────────┘
                         ↓           S2404
                      ╱──────╲
                    ╱  DO ALL  ╲         ┌────────┐
                  ╱  APPLICATION ╲  YES  │  END   │
                 ⟨ RESULTS SATISFY ⟩────→└────────┘
                  ╲  CONSTRAINT  ╱
                    ╲ CONDITION? ╱
                      ╲──────╱
                         │ NO
                         ↓
          ┌──────────────────────────────────┐
          │ REGISTER ONLY ASSIGNMENT TARGET   │
          │ INFORMATION NOT SATISFYING        │──── S2405
          │ CONSTRAINT CONDITION TO ANALYSIS  │
          │ TARGET INFORMATION                │
          └──────────────┬───────────────────┘
                         ↓
          ┌──────────────────────────────────┐
          │ REGISTER SECOND PRIORITY DESIRED  │
          │ CONDITION TO CURRENT DESIRED      │──── S2406
          │ CONDITION                         │
          └──────────────┬───────────────────┘
```

# FIG. 25

230A

| RECORD NUMBER (SLIP NUMBER) | PROPERTY 1 (DESIRED AGENT) | PROPERTY 2 (SLIP TYPE) | PROPERTY 3 (CUSTOMER NAME) | ... |
|---|---|---|---|---|
| SLIP J | AGENT X | AIR CONDITIONER | CUSTOMER T | ... |
| SLIP K | AGENT Y | AIR CONDITIONER | CUSTOMER U | ... |
| SLIP L | AGENT Z | REFRIGERATOR | CUSTOMER P | ... |
| SLIP M | AGENT X | WASHING MACHINE | CUSTOMER V | ... |

240A

| RECORD NUMBER (AGENT NUMBER) | PROPERTY 1 (ACCEPTABLE NUMBER) | PROPERTY 2 (PAST ASSIGNMENT) | PROPERTY 3 (WORK OF SPECIALTY) | ... |
|---|---|---|---|---|
| AGENT X | 1 | CUSTOMER P | AIR CONDITIONER INSTALLATION | ... |
| AGENT Y | 2 | CUSTOMER S | REFRIGERATOR INSTALLATION | ... |
| AGENT Z | 2 | CUSTOMER Q,R | WASHING MACHINE INSTALLATION | ... |

# FIG. 26

261

| RECORD NUMBER (SLIP NUMBER) | DESIRED CONDITION 1 |
|---|---|
| SLIP J | X |
| SLIP K | Y |
| SLIP L | Z |
| SLIP M | X |

DETERMINATION BASED ON CONSTRAINT CONDITION

262

| RECORD NUMBER (SLIP NUMBER) | DESIRED CONDITION 1 |
|---|---|
| SLIP J | (ON HOLD) |
| SLIP K | Y |
| SLIP L | Z |
| SLIP M | (ON HOLD) |

# FIG. 27

263

| RECORD NUMBER (SLIP NUMBER) | DESIRED CONDITION 1 | DESIRED CONDITION 2 |
|---|---|---|
| SLIP J | (ON HOLD) | (ON HOLD) |
| SLIP K | Y | -- |
| SLIP L | Z | -- |
| SLIP M | (ON HOLD) | (ON HOLD) |

# FIG. 28

264

| RECORD NUMBER (SLIP NUMBER) | DESIRED CONDITION 1 | DESIRED CONDITION 2 | DESIRED CONDITION 2 |
|---|---|---|---|
| SLIP J | (ON HOLD) | (ON HOLD) | X |
| SLIP K | Y | -- | -- |
| SLIP L | Z | -- | -- |
| SLIP M | (ON HOLD) | (ON HOLD) | (ON HOLD) |

## FIG. 29

301

**1. ASSIGNMENT TARGET INFORMATION**

302

230A

| SLIP NUMBER | DESIRED AGENT | SLIP TYPE | CUSTOMER NAME |
|---|---|---|---|
| SLIP J | AGENT X | AIR CONDITIONER | CUSTOMER T |
| SLIP K | AGENT Y | AIR CONDITIONER | CUSTOMER U |
| SLIP L | AGENT Z | REFRIGERATOR | CUSTOMER P |
| SLIP M | AGENT X | WASHING MACHINE | CUSTOMER V |

**2. ASSIGNEE INFORMATION**

303

240A

| AGENT NUMBER | ACCEPTABLE NUMBER | PAST ASSIGNMENT | WORK OF SPECIALTY |
|---|---|---|---|
| AGENT X | 1 | CUSTOMER P | AIR CONDITIONER INSTALLATION |
| AGENT Y | 2 | CUSTOMER S | AIR CONDITIONER INSTALLATION |
| AGENT Z | 2 | CUSTOMER Q,R | WASHING MACHINE INSTALLATION |

**3. SLIP ASSIGNMENT RESULTS**

304

| SLIP NUMBER | AGENT NUMBER |
|---|---|
| SLIP J | AGENT X |
| SLIP K | AGENT Y |
| SLIP L | AGENT Z |
| SLIP M | AGENT Z |

290

REGISTER 305

Europäisches
Patentamt

European
Patent Office

Office européen
des brevets

# EUROPEAN SEARCH REPORT

Application Number

EP 21 17 7343

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 9 911 088 B2 (MICROSOFT CORP [US]; MICROSOFT TECHNOLOGY LICENSING LLC [US]) 6 March 2018 (2018-03-06) * paragraphs [0149] - [0158]; figures 1-5 * | 1-9 | INV. G06Q10/00 G06Q10/06 |

----- 

TECHNICAL FIELDS
SEARCHED (IPC)

G06Q

The present search report has been drawn up for all claims

| Place of search | Date of completion of the search | Examiner |
|---|---|---|
| Munich | 23 June 2021 | Bîrlescu, V |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

......................................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 21 17 7343

This annex lists the patent family members relating to the patent documents cited in the above-mentioned European search report.
The members are as contained in the European Patent Office EDP file on
The European Patent Office is in no way liable for these particulars which are merely given for the purpose of information.

23-06-2021

| Patent document cited in search report | | Publication date | Patent family member(s) | Publication date |
|---|---|---|---|---|
| US 9911088 | B2 | 06-03-2018 | NONE | |

For more details about this annex : see Official Journal of the European Patent Office, No. 12/82

EPO FORM P0459

**EP 3 945 475 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017122955 A